# EUROPEAN PATENT APPLICATION

(11) **EP 4 332 136 A1**
(43) Date of publication of application: **06.03.2024**
(21) Application number: 22795698.4
(22) Date of filing: 22.04.2022
(51) Int. Cl.: C08F 297/04, C08L 53/02, C09K 3/00, F16F 15/02

(54) **RESIN COMPOSITION, FOAMABLE COMPOSITION, AND CROSSLINKED FOAM BODY**

(30) Priority: 27.04.2021 JP 2021075392
(71) Applicant: Kuraray Co., Ltd., Kurashiki-shi, Okayama 710-0801 (JP)
(72) Inventor: SENDA, Yasushi, Kamisu-shi, Ibaraki 314-0197 (JP)
(74) Representative: Müller-Boré & Partner Patentanwälte PartG mbB
(86) International application number: PCT/JP2022/018634
(87) International publication number: WO 2022/230785

(57) **Abstract**

A resin composition containing: as a component (x), a hydrogenated product (X) of a block copolymer having a polymer block (A-1) derived from an aromatic vinyl compound and a polymer block (B-1) derived from a conjugated diene compound; and as a component (y), a block copolymer (Y0) having a polymer block (A-2) derived from an aromatic vinyl compound and a polymer block (B-2) derived from a conjugated diene compound, or a hydrogenated product thereof (Y), satisfying the following requirements [1] to [4]: [1] the component (x) has a glass transition temperature of -40°C or more, [2] the component (y) has a glass transition temperature of -50°C or less, [3] the resin composition has a ratio Mx/My of a mass Mx of the component (x) with respect to a mass My of the component (y) of 1/99 to 99/1, and [4] the polymer block (B-2) contains a structural unit derived from β-farnesene.

## Description

### Technical Field

The present invention relates to a resin composition, a foamable composition, and a crosslinked foam body.

### Background Art

A hydrogenated product of a block copolymer containing a polymer block (A) formed of a structural unit derived from an aromatic vinyl compound and a polymer block (B) containing a structural unit derived from a conjugated diene compound (which may be hereinafter referred to as a "hydrogenated block copolymer" or a "hydrogenated product"), such as a hydrogenated styrene-based elastomer, has been known.

The hydrogenated block copolymer has a vibration damping capability, and has been used as a vibration damping material in various fields.

For example, a hydrogenated block copolymer of a styrene-based compound and a conjugated diene compound, such as isoprene and butadiene, that is specified in the peak temperature loss tangent (tanδ) and the vinyl bond amount for improving the mechanical characteristics, such as the vibration damping capability, the flexibility, the heat resistance, the tensile strength, and the impact strength, is described (see, for example, PTL 1).

As the hydrogenated block copolymer, a hydrogenated block copolymer containing a monomer unit derived from farnesene has been known (see, for example, PTL 2). PTL 2 states that the hydrogenated block copolymer improves the molding processability and the flexibility.

### Citation List

### Patent Literatures

PTL 1: JP 2002-284830 A
PTL 2: WO 2016/125899 A

### Summary of Invention

### Technical Problem

However, improvements in characteristics of the hydrogenated block copolymer have been demanded in various applications, and there are demands of further enhancing the moldability and exhibiting flexibility at low temperature while retaining the vibration damping capability. Accordingly, the hydrogenated block copolymers described in PTLs 1 and 2 still have room for improvement.

Under the circumstances, a problem to be solved by the present invention is to provide a resin composition that is capable of exhibiting at least one of a good moldability and a flexibility at low temperature, while retaining a vibration damping capability around room temperature, a foamable composition, and a crosslinked foam body.

### Solution to Problem

The present inventors have found that the problem can be solved by a resin composition containing: as a component (x), a hydrogenated product (X) of a block copolymer having a polymer block (A-1) containing a structural unit derived from an aromatic vinyl compound and a polymer block (B-1) containing a structural unit derived from a conjugated diene compound; and as a component (y), a block copolymer (Y0) having a polymer block (A-2) containing a structural unit derived from an aromatic vinyl compound and a polymer block (B-2) containing a structural unit derived from a conjugated diene compound, or a hydrogenated product thereof (Y), in which the glass transition temperatures of the component (x) and the component (y) are specified, and the polymer block (B-2) is a specific component, and thus the present invention has been completed.

The present invention relates to the following items <1> to <20>.
<1> A resin composition containing:
   as a component (x), a hydrogenated product (X) of a block copolymer having a polymer block (A-1) containing a structural unit derived from an aromatic vinyl compound and a polymer block (B-1) containing a structural unit derived from a conjugated diene compound; and
   as a component (y), a block copolymer (Y0) having a polymer block (A-2) containing a structural unit derived from an aromatic vinyl compound and a polymer block (B-2) containing a structural unit derived from a conjugated diene compound, or a hydrogenated product thereof (Y),
   satisfying the following requirements [1] to [4]:
      [1] the component (x) has a glass transition temperature of -40°C or more,
      [2] the component (y) has a glass transition temperature of -50°C or less,
      [3] the resin composition has a ratio Mx/My of a mass Mx of the component (x) with respect to a mass My of the component (y) of 1/99 to 99/1, and
      [4] the polymer block (B-2) contains a structural unit derived from β-farnesene.
<2> The resin composition according to the item <1>, wherein the component (x) has a content of the polymer block (A-1) of 23% by mass or less.
<3> The resin composition according to the item <1> or <2>, wherein the component (x) has a hydrogenation rate of 85% by mol or more.
<4> The resin composition according to any one of the items <1> to <3>, wherein the component (x) has a weight average molecular weight of 100,000 to 250,000.
<5> The resin composition according to any one of the items <1> to <4>, wherein the component (x) has a melt flow rate at 230°C and a load of 2.16 kg of 20 g/10 min or less, measured according to JIS K7210:2014.
<6> The resin composition according to any one of the items <1> to <5>, wherein the polymer block (B-1) contains a structural unit derived from isoprene.
<7> The resin composition according to any one of the items <1> to <6>, wherein the polymer block (B-1) has a vinyl bond amount of 50% by mol or more.
<8> The resin composition according to any one of the items <1> to <7>, wherein the component (y) has a content of the polymer block (A-2) of 35% by mass or less.
<9> The resin composition according to any one of the items <1> to <8>, wherein the component (y) is the hydrogenated product (Y) of the block copolymer, and the hydrogenated product (Y) of the block copolymer has a hydrogenation rate of 85% by mol or more.
<10> The resin composition according to any one of the items <1> to <9>, wherein the component (y) has a weight average molecular weight of 40,000 to 400,000.
<11> The resin composition according to any one of the items <1> to <10>, wherein the component (y) has a melt flow rate at 230°C and a load of 2.16 kg of 10 g/10 min or more, measured according to JIS K7210:2014.
<12> The resin composition according to any one of the items <1> to <11>, wherein the ratio Mx/My is 45/55 to 80/20.
<13> The resin composition according to any one of the items <1> to <11>, wherein the ratio Mx/My is 20/80 to 37/63.
<14> The resin composition according to any one of the items <1> to <13>, wherein the resin composition has a biobased content of 1 to 80% by mass, measured according to ASTM D6866-20.
<15> The resin composition according to any one of the items <1> to <14>, wherein the resin composition has a melt flow rate at 230°C and a load of 2.16 kg of 100 g/10 min or less, measured according to JIS K7210:2014.
<16> The resin composition according to any one of the items <1> to <15>, wherein the resin composition has a peak top intensity of tanδ of 0.4 or more, measured according to JIS K7244-10:2005, under conditions of a strain amount of 0.1%, a frequency of 1 Hz, a measurement temperature of -30 to +50°C, a heating rate of 3°C/min, and a shearing mode.
<17> The resin composition according to any one of the items <1> to <16>, wherein the component (x) has a content of the structural unit derived from β-farnesene that is smaller than a content of the structural unit derived from β-farnesene of the component (y).
<18> The resin composition according to any one of the items <1> to <17>, wherein in the resin composition, one of the component (x) and the component (y) is as a matrix, and the other of the component (x) and the component (y) forms domains dispersed in the matrix, and the domains have an average aspect ratio of 1.0 to 3.0.
<19> A foamable composition containing:
   the resin composition (i) according to any one of the items <1> to <18>;
   at least one kind of an olefin-based polymer (ii) selected from the group consisting of ethylene-propylene-diene copolymer rubber, an ethylene-vinyl acetate copolymer, and a polyethylene-based resin;
   a crosslinking agent (iii); and
   a foaming agent (iv).
<20> A crosslinked foam body including the foamable composition according to the item <19>.

### Advantageous Effects of Invention

The present invention can provide a resin composition that is capable of exhibiting at least one of a good moldability and a flexibility at low temperature, while retaining a vibration damping capability around room temperature, a foamable composition, and a crosslinked foam body.

### Brief Description of Drawings

Fig. 1 is one example of an atomic force microscope (AFM) image of a resin composition obtained in Example 2.
Fig. 2 is one example of an AFM image of a resin composition obtained in Comparative Example 1.

### Description of Embodiments

Embodiments of the present invention will be described below.

Embodiment obtained by optionally selecting or optionally combining the items shown in the description herein are also encompassed in the present invention.

In the description herein, the preferred definitions can be optionally selected, and a combination of the preferred definitions can be considered more preferred.

In the description herein, the description "XX to YY" means "XX or more and YY or less".

In the description herein, the lower limit values and the upper limit values described in a stepwise manner for the preferred numerical range (such as a range of the content or the like) each can be independently combined. For example, the description "preferably 10 to 90, and more preferably 30 to 60" can derive "10 to 60" by combining the "preferred lower limit value (10)" and the "more preferred upper limit value (60)".

### [Resin Composition]

The resin composition according to an embodiment of the present invention contains: as a component (x), a hydrogenated product (X) of a block copolymer having a polymer block (A-1) containing a structural unit derived from an aromatic vinyl compound and a polymer block (B-1) containing a structural unit derived from a conjugated diene compound; and as a component (y), a block copolymer (Y0) having a polymer block (A-2) containing a structural unit derived from an aromatic vinyl compound and a polymer block (B-2) containing a structural unit derived from a conjugated diene compound, or a hydrogenated product thereof (Y), and satisfies the following requirements [1] to [4]:
[1] the component (x) has a glass transition temperature of -40°C or more,
[2] the component (y) has a glass transition temperature of -50°C or less,
[3] the resin composition has a ratio Mx/My of a mass Mx of the component (x) with respect to a mass My of the component (y) of 1/99 to 99/1, and
[4] the block copolymer (Y0) or the hydrogenated product thereof (Y) contains at least one of a structural unit derived from β-farnesene as the polymer block (B-2).

The resin composition satisfies the requirements [1] to [4], and thereby is capable of exhibiting at least one of a good moldability and a flexibility at low temperature, while retaining the vibration damping capability around room temperature. In more detail, the resin composition has a high loss tangent (tanδ) around room temperature, and also has at least one of a good moldability and a flexibility at low temperature.

According to the investigations by the present inventors, it has been found that the component (y), i.e., the block copolymer or the hydrogenated block copolymer having a low a glass transition temperature (Tg) containing a structural unit derived from β-farnesene, is added to the component (x), i.e., the hydrogenated block copolymer having a high Tg, and thereby the resin composition exhibits good moldability while retaining the vibration damping capability with a ratio Mx/My of the mass Mx of the component (x) with respect to the mass My of the component (y) in a range of 45/55 to 99/1, and exhibits a flexibility at low temperature while preventing the vibration damping capability from being largely deteriorated with a ratio Mx/My in a range of 1/99 to 44/56.

As one of the mechanisms therefor, while not limited thereto, it is considered that the component (y) as a low Tg component contains a structural unit derived from β-farnesene, and thereby has high compatibility with the component (x), preventing the component (x) or the component (y) from exhibiting anisotropy in the resin components, and consequently the peak top intensity of tanδ of the entire resin composition is suppressed from being decreased. In addition, it is also considered that the moldability and the low temperature flexibility of the component (y) contribute thereto, thereby enabling the exhibition of the moldability and the flexibility at low temperature while retaining the vibration damping capability.

### <Glass Transition Temperatures (Tg) of Component (x) and Component (y)>

The component (x) is the hydrogenated product (X) of a block copolymer having the polymer block (A-1) containing a structural unit derived from an aromatic vinyl compound and the polymer block (B-1) containing a structural unit derived from a conjugated diene compound, and satisfies the requirement [1].

The component (y) is the block copolymer (Y0) having the polymer block (A-2) containing a structural unit derived from an aromatic vinyl compound and the polymer block (B-2) containing a structural unit derived from a conjugated diene compound, or the hydrogenated product thereof (Y), and satisfies the requirement [2].

The component (x) that satisfies the requirement [1] can enhance the tanδ of the resin composition around room temperature. The component (y) that satisfies the requirement [2] can secure the moldability and the flexibility at low temperature of the resin composition.

In the description herein, the Tg of the component (x) and the Tg of the component (y) each are measured with a differential scanning calorimeter (DSC). Specifically, in a DSC curve measured with DSC, a temperature at which the base line is shifted is designated as the Tg. In more detail, the Tg of the component (x) and the Tg of the component (y) each are measured according to the method shown in the examples.

The Tg of the component (x) is preferably -30°C or more, more preferably -20°C or more, further preferably -10°C or more, and particularly preferably 0°C or more, from the standpoint of increasing the tanδ around room temperature. The upper limit thereof is not particularly limited, and is preferably +40°C or less, more preferably +35°C or less, and further preferably +30°C or less, from the standpoint of the easiness in production. In other words, the Tg of the component (x) is preferably -40 to +40°C.

The Tg of the component (y) is preferably -51°C or less, and more preferably -52°C or less, from the standpoint of the flexibility at low temperature. The lower limit thereof is not particularly limited, and is preferably -65°C or more, more preferably -60°C or more, and further preferably -55°C or more, from the standpoint of the easiness in production. In other words, the Tg of the component (y) is preferably -65 to -50°C.

The difference between the Tg of the component (x) and the Tg of the component (y) may be at least 10°C or more, and is preferably 20°C or more, more preferably 30°C or more, and further preferably 40°C or more, from the standpoint of facilitating the securement of the moldability. The difference thereof is preferably 100°C or less, more preferably 90°C or less, and further preferably 80°C or less, from the standpoint of facilitating the increase of the tanδ around room temperature. In other words, the difference between the Tg of the component (x) and the Tg of the component (y) is preferably 10 to 100°C.

### <Content Ratio of Component (x) and Component (y)>

As defined in the requirement [3], the ratio Mx/My of the mass Mx of the component (x) with respect to the mass My of the component (y) in the resin composition is 1/99 to 99/1.

In the case where the mass ratio Mx/My is in the range, a high tanδ can be obtained around room temperature mainly due to the presence of the component (x), and an excellent moldability can be obtained mainly due to the presence of the component (y).

The mass ratio Mx/My is preferably 45/55 to 95/5, more preferably 45/55 to 90/10, further preferably 45/55 to 85/15, still further preferably 45/55 to 80/20, still more further preferably 50/50 to 80/20, even further preferably 55/45 to 80/20, even still further preferably 60/40 to 80/20, even still more further preferably 65/35 to 80/20, and particularly preferably 65/35 to 75/25, from the standpoint of facilitating the enhancement of the moldability and the vibration damping capability around room temperature of the resin composition. The mass ratio is preferably 5/95 to 44/56, more preferably 10/90 to 43/57, further preferably 15/85 to 40/60, still further preferably 20/80 to 37/63, still more further preferably 21/79 to 37/63, and particularly preferably 25/75 to 35/65, from the standpoint of facilitating the enhancement of the flexibility at low temperature.

### <Component (x)>

The component (x) is the hydrogenated product (X) of a block copolymer having the polymer block (A-1) containing a structural unit derived from an aromatic vinyl compound and the polymer block (B-1) containing a structural unit derived from a conjugated diene compound, and satisfies the requirements [1] and [3].

For allowing the component (x) to satisfy the requirement [1], for example, the vinyl bond amount of the conjugated diene compound of the polymer block (B-1) constituting the hydrogenated product (X) of the block copolymer is regulated to a suitable value, and thereby the Tg of the component (x) can be within the range.

The component (x) may contain one kind of the hydrogenated product (X) of the block copolymer alone, or may contain two or more kinds thereof. The case where one kind of the hydrogenated product (X) of the block copolymer is contained alone in the component (x) can make the production thereof easy, and the case where two or more kinds thereof are contained therein facilitates the broadening of the temperature range where the resin composition exhibits a high tanδ.

The content of the polymer block (A-1) (in the case where multiple kinds of the polymer blocks (A-1) are contained, the total content thereof) in the component (x) is preferably 23% by mass or less, more preferably 21% by mass or less, further preferably 18% by mass or less, and still further preferably 15% by mass or less, from the standpoint of the vibration damping capability, and is preferably 5% by mass or more, more preferably 8% by mass or more, and further preferably 10% by mass or more, from the standpoint of the mechanical properties. In other words, the content of the polymer block (A-1) in the hydrogenated product (X) of the block copolymer as the component (x) is preferably 5 to 23% by mass.

The content of the polymer block (A-1) in the component (x) is a value that is obtained by a ¹H-NMR measurement, and in more detail, is a value that is measured according to the method shown in the examples. The same is applied to the content of the polymer block (A-2) in the component (y) described later.

The weight average molecular weight of the component (x) is preferably 60,000 to 400,000, more preferably 80,000 to 300,000, further preferably 100,000 to 250,000, and still further preferably 130,000 to 200,000, from the standpoint of the heat resistance and the moldability.

All the "weight average molecular weights" shown in the description herein and the scope of claims each are a standard polystyrene conversion weight average molecular weight obtained by the gel permeation chromatography (GPC) measurement, and the detailed measurement method therefor can be in accordance with the method shown in the examples.

The weight average molecular weight of the hydrogenated product (X) of the block copolymer as the component (x) can be within the range, for example, by regulating the monomer amount with respect to the polymerization initiator.

The content of the structural unit derived from β-farnesene in the component (x) is preferably smaller than the content of the structural unit derived from β-farnesene in the component (y) from the standpoint of the vibration damping capability around room temperature, and is more preferably 10% by mass or less, further preferably 5% by mass or less, still further preferably 2% by mass or less, and particularly preferably 0% by mass (i.e., no structural unit derived from β-farnesene is contained).

### <Component (y)>

The component (y) is the block copolymer (Y0) having the polymer block (A-2) containing a structural unit derived from an aromatic vinyl compound and the polymer block (B-2) containing a structural unit derived from a conjugated diene compound, or the hydrogenated product thereof (Y), and satisfies the requirements [2] to [4].

For allowing the component (y) to satisfy the requirement [2], for example, the vinyl bond amount of the conjugated diene compound of the polymer block (B-2) constituting the block copolymer (Y0) or the hydrogenated product thereof (Y) is regulated to a suitable value, and thereby the Tg of the component (y) can be within the range.

For allowing the component (y) to satisfy the requirement [4], furthermore, β-farnesene is used as the conjugated diene compound used in synthesis of the polymer block (B-2). In the case where the component (y) satisfies the requirement [4], the temperature characteristics of the tanδ around room temperature of the resin composition can be allowed to be close to the characteristics thereof before adding the component (y).

The content of the polymer block (A-2) in the component (y) is preferably 35% by mass or less, more preferably 28% by mass or less, and further preferably 23% by mass or less, from the standpoint of the vibration damping capability of the resin composition around room temperature, and is preferably 10% by mass or more, more preferably 14% by mass or more, and further preferably 17% by mass or more, from the standpoint of the mechanical characteristics. In other words, the content of the polymer block (A-2) in the block copolymer (Y0) or the hydrogenated product thereof (Y) as the component (y) is preferably 10 to 35% by mass.

The weight average molecular weight of the component (y) is preferably 40,000 to 400,000, more preferably 40,000 to 300,000, further preferably 40,000 to 250,000, still further preferably 60,000 to 250,000, particularly preferably 80,000 to 250,000, and most preferably 90,000 to 200,000, from the standpoint of the heat resistance and the moldability.

The weight average molecular weight of the block copolymer (Y0) or the hydrogenated product (Y) of the block copolymer as the component (y) can be within the range, for example, by regulating the monomer amount with respect to the polymerization initiator.

The component (y) may contain one of the hydrogenated product (Y) of the block copolymer and the block copolymer (Y0), or may contain both of them. One kind of the hydrogenated product (Y) of the block copolymer may be contained in the component (y), or two or more kinds thereof may be contained therein. One kind of the block copolymer (Y0) may be contained in the component (y), or two or more kinds thereof may be contained therein.

Two of more kinds of the block copolymers (Y0) or the hydrogenated products thereof (Y) contained in the component (y) can facilitate the increase of the tanδ of the resin composition around room temperature.

The configurations and properties common to the component (x) and the component (y), the additional components constituting the resin composition, the properties of the resin composition, and the like will be described below. The block copolymers (X0) and (Y0) used for providing the component (x) and the component (y) will be described.

### <Block Copolymers (X0) and (Y0)>

A block copolymer before hydrogenation (which may be hereinafter referred to as a block copolymer (X0)) for providing the hydrogenated product (X) of the block copolymer as the component (x) contained in the resin composition according to the present embodiment contains the polymer block (A-1) containing a structural unit derived from an aromatic vinyl compound and the polymer block (B-1) containing a structural unit derived from a conjugated diene compound. The block copolymer before hydrogenation (the block copolymer (Y0)) as the component (y) contained in the resin composition according to the present embodiment contains the polymer block (A-2) containing a structural unit derived from an aromatic vinyl compound and the polymer block (B-2) containing a structural unit derived from a conjugated diene compound. The block copolymer (Y0) for providing the hydrogenated product (Y) of the block copolymer as the component (y) contained in the resin composition according to the present embodiment similarly contains the polymer block (A-2) and the polymer block (B-2).

The block copolymer (X0) and the block copolymer (Y0) may be collectively referred simply to as a block copolymer. The hydrogenated product (X) of the block copolymer and the hydrogenated product (Y) of the block copolymer may be collectively referred simply to as a hydrogenated product of the block copolymer.

Only one kind independently of each of the polymer block (A-1), the polymer block (A-2), the polymer block (B-1), and the polymer block (B-2) may be contained in the resin composition, and two or more kinds thereof may be contained therein. In the case where two or more kinds of any of the polymer block (A-1), the polymer block (A-2), the polymer block (B-1), and the polymer block (B-2) are contained, the two or more kinds of the polymer blocks may be the same as or different from each other.

The total content of the polymer block (A-1) and the polymer block (B-1) in the block copolymer (X0) is preferably 80% by mass or more, more preferably 90% by mass or more, further preferably 95% by mass or more, and still further preferably 100% by mass. Accordingly, the total content of the polymer block (A-1) and the polymer block (B-1) in the block copolymer (X0) is, for example, 80 to 100% by mass.

The total content of the polymer block (A-2) and the polymer block (B-2) in the block copolymer (Y0) is preferably 80% by mass or more, more preferably 90% by mass or more, further preferably 95% by mass or more, and still further preferably 100% by mass. Accordingly, the total content of the polymer block (A-2) and the polymer block (B-2) in the block copolymer (Y0) is, for example, 80 to 100% by mass.

In the following description, the polymer block (A-1) and the polymer block (A-2) may be collectively referred to as a polymer block (A). The polymer block (B-1) and the polymer block (B-2) may be collectively referred to as a polymer block (B). The parts that are common to the block copolymer relating to the component (x) (i.e., the block copolymer (X0)) and the block copolymer relating to the component (y) (i.e., the block copolymer (Y0)) will be collectively described, and the block copolymers (X0) and (Y0) may be referred simply to as a "block copolymer".

### [Polymer Block (A)]

The polymer block (A) contains a structural unit derived from an aromatic vinyl compound (which may be hereinafter abbreviated as an "aromatic vinyl compound unit"), and the content thereof is preferably more than 70% by mol, more preferably 80% by mol or more, further preferably 85% by mol or more, still further preferably 90% by mol or more, and particularly preferably 95% by mol or more, and may be substantially 100% by mol. The upper limit of the content of the structural unit derived from an aromatic vinyl compound in the polymer block (A) may be 100% by mol, may be 99% by mol, and may be 98% by mol.

Examples of the aromatic vinyl compound include styrene, o-methylstyrene, m-methylstyrene, p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, P-methyl-2,6-dimethylstyrene, P-methyl-2,4-dimethylstyrene, o-chlorostyrene, m-chlorostyrene, p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-bromomethylstyrene, m-bromomethylstyrene, p-bromomethylstyrene, a styrene derivative substituted with a silyl group, indene, and vinylnaphthalene. One kind of the aromatic vinyl compound may be used alone, or two or more kinds thereof may be used. Among these, α-methylstyrene, p-methylstyrene, and mixtures thereof are preferred, and styrene is more preferred, from the standpoint of the production cost and the balance of properties.

The polymer block (A) may contain a structural unit derived from an additional unsaturated monomer other than the aromatic vinyl compound (which may be hereinafter abbreviated as an "additional unsaturated monomer unit") in a proportion of less than 30% by mol, as far as the objects and effects of the present invention are not impaired. Examples of the additional unsaturated monomer include at least one kind selected from the group consisting of butadiene, isoprene, 2,3-dimethylbutadiene, 1,3-pentadiene, 1,3-hexadiene, isobutylene, methyl methacrylate, methyl vinyl ether, N-vinylcarbazole, β-pinene, 8,9-p-menthene, dipentene, methylenenorbornene, and 2-methylenetetrahydrofuran. In the case where the polymer block (A) contains the additional unsaturated monomer unit, the bonding mode thereof is not particularly limited and may be a random mode or a tapered mode.

The content of the structural unit derived from the additional unsaturated monomer in the polymer block (A) is preferably 10% by mol or less, more preferably 5% by mol or less, and further preferably 0% by mol.

It suffices that the block copolymer has at least one polymer block (A). In the case where the block copolymer has two or more polymer blocks (A), the polymer blocks (A) may be the same as or different from each other. In the description herein, the expression that "the polymer blocks are different from each other" means that the polymer blocks are different from each other in at least one of the monomer units constituting the polymer block, the weight average molecular weight, the stereoregularity, and in the case where multiple kinds of monomer units are contained, the ratio and the copolymerization mode (e.g., random, gradient, and block) of the monomer units.

The block copolymer preferably has two polymer blocks (A).

While the weight average molecular weight (Mw) of the polymer block (A) is not particularly limited, the weight average molecular weight of at least one polymer block (A) among the polymer blocks (A) contained in the block copolymer is preferably 3,000 to 60,000, and more preferably 4,000 to 50,000. In the case where the block copolymer has at least one polymer block (A) having a weight average molecular weight within the range, the mechanical strength is enhanced, and the flowability and the film moldability are also improved.

The weight average molecular weights of the polymer blocks of the block copolymer can be obtained in such a manner that a liquid is sampled and measured after completing the polymerization of each of the polymer blocks in the production process. For example, assuming that two kinds of the polymer blocks (A) are represented by A1 and A2, and one kind of the polymer block (B) is represented by B, as for a triblock copolymer having a structure of A1-B-A2, the weight average molecular weights of the polymer block A1 and the polymer block B are obtained by the above method, and the weight average molecular weight of the polymer block A2 can be obtained by subtracting the weight average molecular weights from the weight average molecular weight of the block copolymer. In an alternative method, as for the triblock copolymer having a structure of A1-B-A2, the total weight average molecular weight of the polymer blocks A1 and A2 is calculated from the weight average molecular weight of the block copolymer and the total content of the polymer blocks A1 and A2 confirmed by a ¹H-NMR measurement, the weight average molecular weight of the polymer block A1 that is firstly deactivated is calculated by a GPC measurement, and the weight average molecular weight is subtracted to provide the weight average molecular weight of the polymer block A2.

### (Polymer Block (B))

The polymer block (B) contains a structural unit derived from a conjugated diene compound (which may be hereinafter abbreviated as a "conjugated diene compound unit"). One kind of the conjugated diene compound may be used alone, or two or more kinds thereof may be used.

Examples of the conjugated diene constituting the conjugated diene compound unit contained in the polymer block (B-1) include isoprene and butadiene.

The polymer block (B-1) preferably contains a structural unit derived from isoprene, and in the production of the polymer block (B-1), for example, as the conjugated diene compound, isoprene may be used alone, or isoprene and butadiene may be used.

In the polymer block (B-1), the content of a structural unit derived from β-farnesene is preferably small, and specifically is preferably 10% by mass or less, more preferably 5% by mass or less, further preferably 1% by mass or less, and particularly preferably 0% by mass (i.e., not contained).

The polymer block (B-2) contains a structural unit derived from β-farnesene (which may be hereinafter referred to as a "β-farnesene unit"). The polymer block (B-2) may contain a β-farnesene unit alone, or may contain structural units derived from β-farnesene and an additional conjugated diene compound.

β-Farnesene has a bulky side chain, and thus has a high effect of preventing the polymer block (B-2) from being crystallized. In the case where β-farnesene is hydrogenated, the Tg thereof is as low as approximately -60°C, which facilitates the enhancement of the flexibility at low temperature of the resin composition.

Examples of the conjugated diene compound that can be used with β-farnesene in producing the polymer block (B-2) include butadiene, myrcene, and isoprene. One kind of the conjugated diene compound may be used alone with β-farnesene, or two or more kinds thereof may be used with β-farnesene.

The polymer block (B-2) contains the structural units derived from β-farnesene and the additional conjugated diene compound, and thereby can enhance the moldability and the flexibility at low temperature of the resin composition.

The content of the β-farnesene unit in the total amount of the polymer block (B-2) is preferably 55% by mass or more, more preferably 60% by mass or more, further preferably 70% by mass or more, still further preferably 80% by mass or more, and particularly preferably 90% by mass or more, from the standpoint of securing the good moldability. The upper limit thereof is not particularly limited, can be 100% by mass, may be 99% by mass, and may be 98% by mass. In other words, the content of the β-farnesene unit in the total amount of the polymer block (B-2) is preferably 55 to 100% by mass.

The content of the β-farnesene unit in the total amount of the polymer block (B-2) in terms of molar amount is preferably 30% by mol or more, more preferably 50% by mol or more, further preferably 65% by mol or more, still further preferably 80% by mol or more, particularly preferably 90% by mol or more, and most preferably substantially 100% by mol. The upper limit thereof may be 99% by mol, and may be 98% by mol. In other words, the content of the β-farnesene unit in the total amount of the polymer block (B-2) is preferably 30 to 100% by mol.

The total content of the conjugated diene compound units in the total amount of the polymer block (B) is preferably 60% by mass or more, more preferably 70% by mass or more, further preferably 80% by mass or more, and particularly preferably 90% by mass or more, from the standpoint of the flexibility and the rubber elasticity. The upper limit thereof is not particularly limited, can be 100% by mass, may be 99% by mass, and may be 98% by mass. In other words, the total content of the structural units derived from the conjugated diene compound in the total amount of the polymer block (B) is preferably 60 to 100% by mass.

The total content of the conjugated diene compound units in the total amount of the polymer block (B) in terms of molar amount is preferably 30% by mol or more, more preferably 50% by mol or more, further preferably 65% by mol or more, still further preferably 80% by mol or more, particularly preferably 90% by mol or more, and most preferably substantially 100% by mol. The upper limit thereof may be 99% by mol, and may be 98% by mol. In other words, the total content of the structural units derived from the conjugated diene compound in the total amount of the polymer block (B) is preferably 30 to 100% by mol.

In the case where isoprene and an additional conjugated diene compound are used in the polymer block (B-1), the content ratio thereof (additional conjugated diene compound/isoprene) (mass ratio) is not particularly limited, as far as the effects of the present invention are not impaired, and is preferably 5/95 to 95/5, more preferably 10/90 to 90/10, further preferably 15/85 to 50/50, and particularly preferably 18/82 to 48/52.

In the case where butadiene is used as the additional conjugated diene compound in the polymer block (B-1), the content ratio thereof (butadiene/isoprene) in terms of molar ratio is preferably 6/94 to 96/4, more preferably 12/88 to 92/8, further preferably 18/82 to 55/45, and particularly preferably 22/78 to 54/46.

In the case where β-farnesene and an additional conjugated diene compound are used in the polymer block (B-2), the content ratio thereof (additional conjugated diene compound/β-farnesene) (mass ratio) is not particularly limited, as far as the effects of the present invention are not impaired, and is preferably 5/95 to 95/5, more preferably 10/90 to 90/10, further preferably 15/85 to 50/50, and particularly preferably 18/82 to 45/55.

In the case where butadiene is used as the additional conjugated diene compound in the polymer block (B-2), the content ratio thereof (butadiene/β-farnesene) in terms of molar ratio is preferably 16/84 to 99/1, more preferably 30/70 to 97/3, further preferably 40/60 to 80/20, and particularly preferably 45/55 to 78/22.

The polymer block (B) may contain a structural unit derived from an additional polymerizable monomer other than the conjugated diene compound, as far as the objects and the effects of the present invention are not impaired. In this case, the content of the structural unit derived from the additional polymerizable monomer other than the conjugated diene compound in the polymer block (B) is preferably 70% by mol or less, more preferably 50% by mol or less, further preferably 35% by mol or less, and particularly preferably 20% by mol or less. The lower limit value of the content of the structural unit derived from the additional polymerizable monomer other than the conjugated diene compound is not particularly limited, may be 0% by mol, may be 5% by mol, and may be 10% by mol. In other words, the content of the structural unit derived from the additional polymerizable monomer other than the conjugated diene compound in the polymer block (B) is preferably 0 to 70% by mol.

Preferred examples of the additional polymerizable monomer include at least one kind of a compound selected from the group consisting of an aromatic vinyl compound, such as styrene, α-methylstyrene, o-methylstyrene, m-methylstyrene, p-methylstyrene, p-t-butylstyrene, 2,4-dimethylstyrene, vinylnaphthalene, and vinylanthracene, methyl methacrylate, methyl vinyl ether, N-vinylcarbazole, β-pinene, 8,9-p-menthene, dipentene, methylene norbornene, 2-methylenetetrahydrofuran, 1,3-cyclopentadiene, 1,3-cyclohexadiene, 1,3-cycloheptadiene, and 1,3-cyclooctadiene. Among these, styrene, α-methylstyrene, and p-methylstyrene are more preferred, and styrene is further preferred.

In the case where the polymer block (B) contains the structural unit derived from the additional polymerizable monomer other than the conjugated diene compound, the bonding mode thereof is not particularly limited and may be a random mode or a tapered mode, and a random mode is preferred.

It suffices that the block copolymer (X0) has at least one polymer block (B-1), and it suffices that the block copolymer (Y0) has at least one polymer block (B-2). In the case where the block copolymers (X0) and (Y0) have two or more polymer blocks (B), the polymer blocks (B) may be the same as or different from each other. In the case where the polymer block (B) has two or more kinds of structural units, the bonding mode thereof may be a random mode, a tapered mode, a completely alternative mode, a partially block mode, a block mode, and a combination of two or more kinds thereof.

The bonding mode of the conjugated diene compound is not particularly limited, as far as the objects and effects of the present invention are not impaired. For example, in the case where the structural unit constituting the polymer block (B-1) is a mixed unit of butadiene and isoprene, the bonding modes of butadiene and isoprene may be a 1,2-bond or a 1,4-bond for butadiene, and may be a 1,2-bond, a 3,4-bond, or a 1,4-bond for isoprene. In the case where the structural unit constituting the polymer block (B-2) is a mixed unit of butadiene and β-farnesene, the bonding modes of butadiene and β-farnesene may be a 1,2-bond or a 1,4-bond for butadiene, and may be a 1,2-bond, a 1,13-bond, or a 3,13-bond for β-farnesene. Only one kind of the bonding mode may exist, or two or more kinds thereof may exist.

The position numbers of carbon atoms of β-farnesene are as follows.

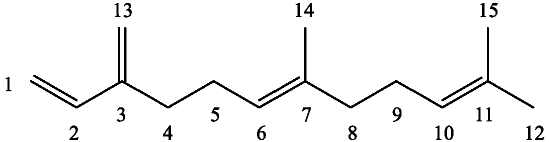

### (Vinyl Bond Amount of Polymer Block (B))

In the case where the structural unit constituting the polymer block (B-1) is a butadiene unit or a mixed unit of butadiene and isoprene, the 1,2-bond of butadiene and the 1,2-bond and the 3,4-bond of isoprene each are designated as a vinyl bond, and the content of the vinyl bond unit is designated as a vinyl bond amount.

In the case where the structural unit constituting the polymer block (B-2) is a β-farnesene unit or a mixed unit of butadiene and β-farnesene, the 1,2-bond of butadiene and the 1,2-bond and the 3,13-bond of β-farnesene each are designated as a vinyl bond, and the content of the vinyl bond unit is designated as a vinyl bond amount.

In the component (x), the vinyl bond amount in the polymer block (B-1) is preferably 50% by mol or more, more preferably 57% by mol or more, further preferably 65% by mol or more, still further preferably 70% by mol or more, and particularly preferably 75% by mol or more, from the standpoint of increasing the Tg. While not limited, the upper limit value of the vinyl bond amount in the polymer block (B-1) may be 95% by mol or less, and may be 90% by mol or less, from the standpoint of the easiness in production. In other words, the vinyl bond amount in the polymer block (B-1) is preferably 50 to 95% by mol.

In the component (y), the vinyl bond amount in the polymer block (B-2) is preferably 1 to 50% by mol, more preferably 3 to 30% by mol, and further preferably 5 to 20% by mol, from the standpoint of the flexibility at low temperature.

The vinyl bond amount is a value that is calculated from a ¹H-NMR measurement according to the method shown in the examples.

The weight average molecular weight of the polymer block (B) in the state before hydrogenation is preferably 15,000 to 800,000, more preferably 20,000 to 600,000, further preferably 30,000 to 400,000, particularly preferably 50,000 to 250,000, and most preferably 70,000 to 200,000, from the standpoint of the vibration damping capability and the like. In the case where the block copolymers (X0) and (Y0) each contain multiple polymer blocks (B), the weight average molecular weight (Mw) of the polymer block (B) is the weight average molecular weight (Mw) of the total of the multiple polymer blocks (B).

It suffices that the block copolymers (X0) and (Y0) each have at least one of the polymer block (B). In the case where the block copolymers (X0) and (Y0) each have two or more of the polymer blocks (B), the polymer blocks (B) may be the same as or different from each other.

In the component (x) and the component (y), the content of a structural unit derived from an aromatic vinyl compound in the polymer block (B) is preferably small, and it is desirable that the structural unit is not contained. In the case where a structural unit derived from an aromatic vinyl compound is contained in the polymer block (B), the vibration damping capability may be deteriorated in some cases.

From the standpoint above, the content of a structural unit derived from an aromatic vinyl compound in the polymer block (B) is preferably 5% by mass or less, more preferably 2% by mass or less, further preferably 1% by mass or less, and particularly preferably 0% by mass.

### (Bonding Mode of Polymer Block (A) and Polymer Block (B))

The bonding mode of the block copolymer is not limited, as far as the polymer block (A) and the polymer block (B) are bonded to each other, and may be any of a linear bonding mode, a branched bonding mode, a radial bonding mode, and a bonding mode including two or more thereof combined. Among these, the bonding mode of the polymer block (A) and the polymer block (B) is preferably a linear mode, and examples thereof assuming that the polymer block (A) is represented by A, and the polymer block (B) is represented by B, include a diblock copolymer represented by A-B, a triblock copolymer represented by A-B-A or B-A-B, a tetrablock copolymer represented by A-B-A-B, a pentablock copolymer represented by A-B-A-B-A or B-A-B-A-B, and a (A-B)ₙX type copolymer (wherein X represents a coupling agent residual group, and n represents an integer of 3 or more). Among them, a linear triblock copolymer and a diblock copolymer are preferred, and an A-B-A type triblock copolymer is preferably used from the standpoint of the flexibility, the easiness in production, and the like.

In the description herein, in the case where polymer blocks of the same type are linearly bonded via a bifunctional coupling agent or the like, the entire bonded polymer blocks are treated as one polymer block. Accordingly, including the examples shown above, a polymer block that is originally represented strictly by Y-X-Y (wherein X represents a coupling residual group) is represented by Y as a whole unless there is a necessity to distinguish from a single polymer block Y In the description herein, the polymer block of this type containing a coupling agent residual group is treated as described above, and therefore, for example, a block copolymer containing a coupling agent residual group that originally represented strictly by A-B-X-B-A (wherein X represents a coupling agent residual group) is represented by A-B-A and is treated as one example of a triblock copolymer.

The block copolymer may have one kind or two or more kinds of a functional group, such as a carboxy group, a hydroxy group, an acid anhydride group, an amino group, and an epoxy group, in the molecular chain and/or at the molecular end, as far as the objects and effects of the present invention are not impaired, and may have no functional group.

### (Polymer Block constituted by Additional Monomer)

The block copolymers (X0) and (Y0) each may contain a polymer block constituted by an additional monomer, in addition to the polymer block (A) and the polymer block (B), as far as the objects and effects of the present invention are not impaired.

Examples of the additional monomer include an unsaturated hydrocarbon compound, such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene; and a functional group-containing unsaturated compound, such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamido-2-methylpropanesulfonic acid, 2-methacrylamido-2-methylpropanesulfonic acid, vinylsulfonic acid, vinyl acetate, and methyl vinyl ether. One kind of these compounds may be used alone, or two or more kinds thereof may be used in combination.

In the case where the block copolymers (X0) and (Y0) each contain the additional polymer block, the content thereof is preferably 10% by mass or less, and more preferably 5% by mass or less.

### <Hydrogenated Product of Block Copolymer>

The hydrogenated product of the block copolymer is obtained by hydrogenating the block copolymer. In the description herein, the hydrogenated product of the block copolymer may be referred to as a "hydrogenated block copolymer" in some cases.

The block copolymer (X0) for providing the hydrogenated product (X) of the block copolymer and the block copolymer (Y0) for providing the hydrogenated product (Y) of the block copolymer each have the structural unit derived from the polymer block (A) and the structural unit derived from the polymer block (B), and the main skeletons thereof are not changed even after the hydrogenation performed. Therefore, the description for the constitutional components and the use proportions thereof, the characteristics, and the like of the block copolymer (X0) and the block copolymer (Y0) are common to the hydrogenated product (X) of the block copolymer and the hydrogenated product (Y) of the block copolymer unless otherwise indicated.

The hydrogenation rate of the polymer block (B) is preferably 85% by mol or more. Specifically, it is preferred that 85% by mol or more of the carbon-carbon bonds of the polymer block (B) are hydrogenated.

The polymer block (B) that has a high hydrogenation rate is excellent in the vibration damping capability in a wide temperature range, the heat resistance, and the weather resistance. From the same standpoint, the hydrogenation rate of the polymer block (B) is more preferably 86% by mol or more, further preferably 87% by mol or more, and still further preferably 88% by mol or more. The upper limit value of the hydrogenation rate is not particularly limited, may be 99% by mol, and may be 98% by mol. In other words, the hydrogenation rate of the polymer block (B) is preferably 85 to 99% by mol.

From the same standpoint, the hydrogenation rate of the component (x) is preferably 85% by mol or more, more preferably 86% by mol or more, further preferably 87% by mol or more, and still further preferably 88% by mol or more, and the upper limit value thereof may be, for example, 99% by mol or less, and may be 98% by mol or less. In other words, the hydrogenation rate of the component (x) is preferably 85 to 99% by mol.

In the case where the component (y) is the hydrogenated product (Y) of the block copolymer, from the same standpoint, the hydrogenation rate of the component (y), which is the hydrogenated product, is preferably 85% by mol or more, more preferably 87% by mol or more, further preferably 88% by mol or more, and still further preferably 89% by mol or more, and the upper limit value thereof may be, for example, 99% by mol or less, and may be 98% by mol or less. In other words, the hydrogenation rate in the case where the component (y) is the hydrogenated product (Y) of the block copolymer is preferably 85 to 99% by mol.

The hydrogenation rate is a value that is obtained by measuring the content of the carbon-carbon double bonds in the structural unit derived from the conjugated diene compound in the polymer block (B) by a ¹H-NMR measurement after the hydrogenation, and in more detail, is a value that is measured according to the method shown in the examples.

The hydrogenated block copolymer may have one kind or two or more kinds of a functional group, such as a carboxy group, a hydroxy group, an acid anhydride group, an amino group, and an epoxy group, in the molecular chain and/or at the molecular end, as far as the objects and effects of the present invention are not impaired, and may have no functional group.

### (Properties of Block Copolymer and Hydrogenated Block Copolymer)

A larger value of the peak top intensity of the loss tangent tanδ of the block copolymer (X0) or the hydrogenated product (X) of the block copolymer, measured according to JIS K7244-10:2005, under conditions of a strain amount of 0.1%, a frequency of 1 Hz, a measurement temperature of -30 to +50°C, a heating rate of 3°C/min, and a shearing mode shows the better properties, such as the vibration damping capability, thereof at that temperature, and a value thereof of 1.0 or more can provide a sufficient vibration damping capability under the actual use environment.

The peak top intensity of tanδ is preferably 1.0 or more, more preferably 1.3 or more, further preferably 1.5 or more, and still further preferably 1.9 or more. As far as the resin composition obtained by mixing the component (x) and the component (y) exhibits the prescribed properties, the peak top intensity of tanδ of the block copolymer (X0) or the hydrogenated product (X) thereof may deviate from the aforementioned range.

A larger value of the peak top intensity of the loss tangent tanδ of the block copolymer (Y0) or the hydrogenated product (Y) of the block copolymer measured according to the aforementioned procedure shows the better properties, such as the vibration damping capability, thereof at that temperature, and a value thereof of 0.5 or more can provide a sufficient vibration damping capability under the actual use environment. The peak top intensity of tanδ is preferably 0.5 or more, more preferably 0.8 or more, further preferably 1.2 or more, still further preferably 1.5 or more, and particularly preferably 1.9 or more. As far as the resin composition obtained by mixing the component (x) and the component (y) exhibits the prescribed properties, the peak top intensity of tanδ of the block copolymer (Y0) or the hydrogenated product (Y) thereof may deviate from the aforementioned range.

The peak top temperature of the loss tangent tanδ of the hydrogenated product (X) of the block copolymer, measured according to JIS K7244-10:2005, under conditions of a strain amount of 0.1%, a frequency of 1 Hz, a measurement temperature of -30 to +50°C, a heating rate of 3°C/min, and a shearing mode is preferably +45°C or less, more preferably +40°C or less, and further preferably +35°C or less, from the standpoint of the easiness in production, and is preferably -30°C or more, more preferably -20°C or more, further preferably -10°C or more, and particularly preferably 0°C or more, from the standpoint of the vibration damping capability around room temperature. In other words, the peak top temperature of tanδ of the hydrogenated product (X) of the block copolymer is preferably -30 to +45°C.

The peak top temperature of the loss tangent tanδ of the block copolymer (Y0) or the hydrogenated product (Y) thereof measured according to the aforementioned procedure is preferably -30°C or less, more preferably -40°C or less, and further preferably -45°C or less, from the standpoint of the flexibility at low temperature. The lower limit of the peak top temperature of the tanδ of the block copolymer (Y0) or the hydrogenated product (Y) thereof is not particularly limited, and may be, for example, -70°C or more from the standpoint of the easiness in production. In other words, the peak top temperature of tanδ of the block copolymer (Y0) or the hydrogenated product (Y) thereof is preferably -70 to -30°C.

The peak top intensity of tanδ means the value of tanδ at which the peak of tanδ becomes maximum. The peak top temperature of tanδ means the temperature at which the peak of tanδ becomes maximum. The peak top intensity of tanδ and the peak top temperature of tanδ of the hydrogenated block copolymer are measured specifically by the method shown in the examples.

Examples of the measure for making these values within the ranges include the regulation of the kind and the proportion of the conjugated diene compound as the monomer for constituting the polymer block (B), and the regulation of the vinyl bond amount of the polymer block (B).

The melt flow rate at 230°C and a load of 2.16 kg of the hydrogenated product (X) of the block copolymer as the component (x) measured according to JIS K7210:2014 is preferably 25 g/10 min or less, more preferably 20 g/10 min or less, further preferably 15 g/10 min or less, still further preferably 10 g/10 min or less, still more further preferably 7 g/10 min or less, and particularly preferably 5 g/10 min or less, from the standpoint of the easiness in production, and is preferably 0.5 g/10 min or more, more preferably 0.7 g/10 min or more, and further preferably 0.9 g/10 min or more, from the standpoint of the moldability of the resin composition. In other words, the melt flow rate of the hydrogenated product (X) of the block copolymer is preferably 0.5 to 25 g/10 min.

The melt flow rate at 230°C and a load of 2.16 kg of the block copolymer (Y0) or the hydrogenated product (Y) thereof as the component (y) measured according to JIS K7210:2014 is preferably 0 g/10 min or more, more preferably 3 g/10 min or more, further preferably 5 g/10 min or more, still further preferably 10 g/10 min or more, particularly preferably 30 g/10 min or more, and most preferably 40 g/10 min or more, from the standpoint of the moldability of the resin composition, and is preferably 300 g/10 min or less, more preferably 90 g/10 min or less, further preferably 80 g/10 min or less, and still further preferably 70 g/10 min or less, from the standpoint of the easiness in production. In other words, the melt flow rate of the block copolymer (Y0) or the hydrogenated product (Y) thereof is preferably 0 to 300 g/10 min.

### (Additional Resin Component)

The resin composition according to the present embodiment may contain, as an additional resin component (z1), at least one kind selected from the group consisting of a styrene-based resin, polyphenylene ether, a polyester resin, polycarbonate, polyacetal, polyamide, polyarylene sulfide, polyarylate, polyimide, polyether ether ketone, and liquid crystal polyester.

The resin composition may contain, as far as the effects of the present invention are not impaired, as a resin component other than the component (x), the component (y), and the component (z1), a hydrogenated resin, such as a hydrogenated coumarone-indene resin, a hydrogenated rosin resin, a hydrogenated terpene resin, and an alicyclic hydrogenated petroleum resin; a tackifier resin, such as an aliphatic resin formed of an olefin and diolefin polymer; and a polymer, such as hydrogenated polyisoprene, hydrogenated polybutadiene, butyl rubber, polyisobutylene, and polybutene.

In the case where the resin composition contains the resin component other than the component (x), the component (y), and the component (z1), the content of the component other than the component (x), the component (y), and the component (z1) in the composition is preferably 50% by mass or less while not limited. In this case, the total content of the component (x) and the component (y) in the composition is preferably 50% by mass or more, more preferably 60% by mass or more, further preferably 80% by mass or more, particularly preferably 90% by mass or more, and most preferably 95% by mass or more, from the standpoint of the vibration damping capability.

### (Additive)

Examples of a component (component (z2)) capable of being contained in the resin composition other than the resin components above include an antioxidant, an ultraviolet ray absorbent, a light stabilizer, a thermal barrier material, an antiblocking agent, a pigment, a dye, a softener, a crosslinking agent, a crosslinking aid, a crosslinking accelerator, a filler, a reinforcing material, a lubricant, an antistatic agent, a flame retarder, a foaming agent, a water repellent, a waterproofing agent, a electroconductivity imparting agent, a thermal conductivity imparting agent, an electromagnetic wave shield imparting agent, a fluorescence agent, and an antimicrobial agent, but are not limited thereto. One kind of these materials may be used alone, or two or more kinds thereof may be used in combination.

Examples of the antioxidant include a phenol-based antioxidant, a phosphorus-based antioxidant, and a sulfur-based antioxidant.

Examples of the ultraviolet ray absorbent include a benzotriazole-based ultraviolet ray absorbent, a hindered amine-based ultraviolet ray absorbent, a benzoate-based ultraviolet ray absorbent, a triazine-based compound, a benzophenone-based compound, a malonate ester compound, and an oxalic acid anilide compound.

Examples of the light stabilizer include a hindered amine-based light stabilizer.

Examples of the thermal barrier material include a material containing a resin or glass having mixed therein heat ray shielding particles having a heat ray shielding function or an organic colorant compound having a heat ray shielding function. Examples of the particles having a heat ray shielding function include particles of an oxide, such as a tin-doped indium oxide, antimony-doped tin oxide, aluminum-doped zinc oxide, tin-doped zinc oxide, and silicon-doped zinc oxide, and particles of an inorganic material having a heat ray shielding function, such as LaB₆ (lanthanum hexaboride). Examples of the organic colorant compound having a heat ray shielding function include a diimonium-based colorant, an aluminum-based colorant, a phthalocyanine-based colorant, an anthraquinone-based colorant, a polymethine-based colorant, a benzenethiol type ammonium-based compound, a thiourea derivative, and a thiol-metal complex.

Examples of the antiblocking agent include inorganic particles and organic particles. Examples of the inorganic particles include an oxide, a hydroxide, a sulfide, a nitride, a halide, a carbonate, a sulfate, an acetate, a phosphate, a phosphite, an organic carboxylate, a silicate, a titanate, a borate, and hydrate compounds thereof of Group IA, Group IIA, Group IVA, Group VIA, Group VIIA, Group VIIIA, Group IB, Group IIB, Group IIIB, and Group IVB elements, and also include a composite compound having these material as center, and natural mineral particles. Examples of the organic particles include a fluorine resin, a melamine resin, a styrene-divinylbenzene copolymer, an acrylic resin-silicone, and crosslinked materials thereof.

Examples of the pigment include an organic pigment and an inorganic pigment. Examples of the organic pigment include an azo-based pigment, a quinacridone-based pigment, and a phthalocyanine-based pigment. Examples of the inorganic pigment include titanium oxide, zinc sulfide, carbon black, a lead-based pigment, a cadmium-based pigment, a cobalt-based pigment, an iron-based pigment, a chromium-based pigment, ultramarine blue, and iron blue.

Examples of the dye include azo-based, anthraquinone-based, phthalocyanine-based, quinacridone-based, perylene-based, dioxazine-based, indolinone-based, isoindolinone-based, quinonimine-based, triphenylmethane-based, thiazole-based, nitro-based, and nitroso-based dyes.

Examples of the softener include known softeners, for example, a hydrocarbon oil, such as a paraffin-based hydrocarbon oil, e.g., paraffin oil, a naphthene-based hydrocarbon oil, and an aromatic hydrocarbon oil; a vegetable oil, such as a peanut oil and rosin; a phosphate ester; low molecular weight polyethylene glycol; liquid paraffin; and a hydrocarbon-based synthetic oil, such as low molecular weight polyethylene, an ethylene-α-olefin cooligomer, liquid polybutene, liquid polyisoprene and a hydrogenated product thereof, and liquid polybutadiene and a hydrogenated product thereof. One kind of these materials may be used alone, or two or more kinds thereof may be used in combination.

Examples of the crosslinking agent include a radical generator, sulfur, and a sulfur compound.

Examples of the radical generator include an organic peroxide, for example, a dialkyl monoperoxide, such as dicumyl peroxide, di-t-butyl peroxide, and t-butylcumyl peroxide; a diperoxide, such as 2,5-dimethyl-2,5-di(t-butylperoxy)hexane, 2,5-dimethyl-2,5-di(t-butylperoxy)hexyne-3, bis(t-butyldioxyisopropyl)benzene, 1,1-bis(t-butylperoxy)-3,3,5-trimethylcyclohexane, and n-butyl-4,4-bis(t-butylperoxy) valerate; a benzoyl group-containing peroxide, such as benzoyl peroxide, p-chlorobenzoyl peroxide, and 2,4-dichlorobenzoyl peroxide; a monoacylalkyl peroxide, such as t-butyl peroxybenzoate; a percarbonate, such as t-butylperoxyisopropyl carbonate; and a diacyl peroxide, such as diacetyl peroxide and lauroyl peroxide. One kind of these compounds may be used alone, or two or more kinds thereof may be used in combination. Among these, 2,5-dimethyl-2,5-di(t-butylperoxy)hexane and dicumyl peroxide are preferred from the standpoint of the reactivity.

Examples of the sulfur compound include sulfur monochloride and sulfur dichloride.

Examples of the crosslinking agent also include a phenol-based resin, such as an alkylphenol resin and a brominated alkylphenol resin, a combination of p-quinone dioxime and lead dioxide, and a combination of p,p'-dibenzoylquinone dioxime and trilead tetraoxide.

Examples of the crosslinking aid include known crosslinking aids, for example, a polyfunctional monomer, such as trimethylolpropane trimethacrylate, trimethylolpropane triacrylate, triallyl trimellitate, triallyl 1,2,4-benzenetricarboxylate, triallyl isocyanurate, 1,6-hexanediol dimethacrylate, 1,9-nonanediol dimethacrylate, 1,10-decanediol dimethacrylate, polyethylene glycol dimethacrylate, ethylene glycol dimethacrylate, diethylene glycol dimethacrylate, triethylene glycol dimethacrylate, divinylbenzene, glycerol dimethacrylate, and 2-hydroxy-3-acryloyloxypropyl methacrylate; stannous chloride, ferric chloride, an organic sulfonic acid, polychloroprene, and chlorosulfonated polyethylene. One kind of the crosslinking aid may be used alone, or two or more kinds thereof may be used in combination.

Examples of the crosslinking accelerator include a thiazole compound, such as N,N-diisopropyl-2-benzothiazole sulfenamide, 2-mercaptobenzothiazole, and 2-(4-morpholinodithio)benzothiazole; a guanidine compound, such as diphenylguanidine and triphenylguanidine; an aldehyde-amine-based reaction product or an aldehyde-ammonia-based reaction product, such as a butylaldehyde-aniline reaction product and a hexamethylenetetramine-acetaldehyde reaction product; an imidazoline compound, such as 2-mercaptoimidazoline; a thiourea compound, such as thiocarbanilide, diethylurea, dibutylthiourea, trimethylthiourea, and di-o-tolylthiourea; dibenzothiazyldisulfide; a thiuram monosulfide compound or a thiuram polysulfide compound, such as tetramethylthiuram monosulfide, tetramethylthiuram disulfide, and pentamethylthiuram tetrasulfide; a thiocarbamate compound, such as zinc dimethyldithiocarbamate, zinc ethylphenyldithiocarbamate, sodium dimethyldithiocarbamate, selenium dimethyldithiocarbamate, and tellurium diethyldithiocarbamate; a xanthate compound, such as zinc dibutylxanthate; and zinc flower. One kind of the crosslinking accelerator may be used alone, or two or more kinds thereof may be used in combination.

Examples of the filler and/or the reinforcing material include an inorganic filler, such as talc, clay, mica, calcium silicate, glass, glass hollow spheres, glass fibers, calcium carbonate, magnesium carbonate, basic magnesium carbonate, aluminum hydroxide, magnesium hydroxide, calcium hydroxide, zinc borate, dawsonite, ammonium polyphosphate, calcium aluminate, hydrotalcite, silica, diatom earth, alumina, titanium oxide, iron oxide, magnesium oxide, tin oxide, antimony oxide, barium ferrite, strontium ferrite, carbon fibers, activated carbon, carbon hollow spheres, calcium titanate, lead titanate zirconate, and silicon carbide; an organic filler, such as wood powder and starch; a conductive filler, such as carbon black, graphite, and carbon nanotubes; and a metal filler, such as silver powder, copper powder, nickel powder, tin powder, copper fibers, stainless steel fibers, aluminum fibers, and iron fibers.

The content of the additive contained in the resin composition is not particularly limited, and may be appropriately regulated depending on the kind and the like of the additive. In the case where the resin composition contains the additive, the content of the additive may be, for example, 50% by mass or less, 45% by mass or less, or 30% by mass or less, and may be, for example, 0.01% by mass or more, 0.1% by mass or more, or 1% by mass or more, based on the total mass of the resin composition. In other words, the content of the additive may be for example, 0.01 to 50% by mass based on the total mass of the resin composition.

The component (z1) as the additional resin component and the component (z2) may be used in combination. For example, a polyolefin, such as polypropylene, and a paraffin oil may be used in combination. In this case, the temperature range in which the tanδ shows the prescribed intensity can be easily broadened, and thereby the resin composition suitable for a wider range of applications can be obtained.

### <Properties of Resin Composition>

The properties of the resin composition according to an embodiment of the present invention will be described.

### (Peak Top Intensity and Temperature of tanδ)

The peak top intensity of tanδ of the resin composition measured according to JIS K7244-10:2005, under conditions of a strain amount of 0.1%, a frequency of 1 Hz, a measurement temperature of -30 to +50°C, a heating rate of 3°C/min, and a shearing mode is preferably 0.4 or more, more preferably 0.6 or more, further preferably 0.8 or more, still further preferably 1.0 or more, and particularly preferably 1.3 or more, from the standpoint of facilitating the securement of the vibration damping capability around room temperature. The upper limit thereof is not particularly limited, and is, for example, 3.0 or less from the standpoint of the easiness in production. In other words, peak top intensity of tanδ of the resin composition measured according to the aforementioned procedure is preferably 0.4 to 3.0.

The peak top temperature of tanδ of the resin composition is preferably +45°C or less, more preferably +40°C or less, and further preferably +35°C or less, from the standpoint of the easiness in production, and is preferably -30°C or more, more preferably -20°C or more, further preferably -10°C or more, still further preferably 0°C or more, and particularly preferably 10°C or more, from the standpoint of the vibration damping capability around room temperature. In other words, the peak top temperature of tanδ of the hydrogenated product (X) of the block copolymer is preferably -30 to +45°C.

The peak top intensity and temperature of tanδ of the resin composition may be measured specifically by the procedure shown in the examples.

### (Melt Flow Rate (MFR))

The melt flow rate at 230°C and a load of 2.16 kg of the resin composition measured according to JIS K7210:2014 is preferably 100 g/10 min or less, more preferably 70 g/10 min or less, and further preferably 50 g/10 min or less, from the standpoint of the easiness in production, and is preferably 1 g/10 min or more, more preferably 3 g/10 min or more, and further preferably 5 g/10 min or more, from the standpoint of the moldability. In other words, the melt flow rate of the resin composition is preferably 1 to 100 g/10 min.

The melt flow rate of the resin composition may be measured specifically by the procedure shown in the examples.

### (Biobased Content)

The biobased content of the resin composition measured according to ASTM D6866-20 is preferably 1 to 80% by mass, more preferably 5 to 70% by mass, further preferably 10 to 65% by mass, still further preferably 20 to 60% by mass, and particularly preferably 30 to 55% by mass, from the standpoint of the efficient use of the exhaustible resource, the CO₂ reduction, and the securement of the vibration damping capability and the moldability. The biobased content of the crosslinked foam body described later is preferably 1 to 80% by mass, more preferably 5 to 70% by mass, further preferably 10 to 65% by mass, still further preferably 20 to 60% by mass, and particularly preferably 30 to 55% by mass.

The biobased content may be measured specifically by the procedure shown in the examples.

### (Shear Storage Elastic Modulus G' at -20°C)

The shear storage elastic modulus G' at -20°C of the resin composition measured according to JIS K7244-10:2005, measured by performing a complex shear viscosity test under condition of a frequency of 1 Hz is preferably 300 MPa or less, more preferably 200 MPa or less, further preferably 100 MPa or less, still further preferably 50 MPa or less, particularly preferably 30 MPa or less, and most preferably 20 MPa or less, from the standpoint of the flexibility at low temperature. The lower limit of the shear storage elastic modulus G' is not particularly limited, and is, for example, 0.1 MPa from the standpoint of the mechanical strength. In other words, the shear storage elastic modulus G' at -20°C of the resin composition is preferably 0.1 to 300 MPa.

The shear storage elastic modulus G' may be measured specifically by the procedure shown in the examples.

### (Morphology of Resin Composition)

The resin composition in one embodiment has a dispersion structure (morphology) in which one of the component (x) and the component (y) is as a matrix, and the other of the component (x) and the component (y) forms domains dispersed in the matrix.

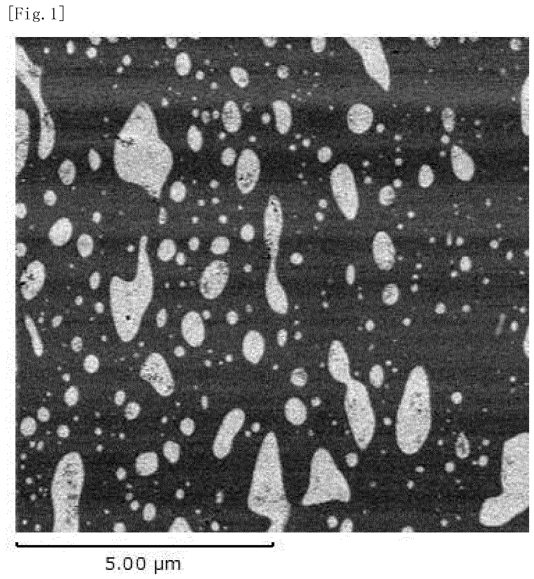

Fig. 1 shows one example of the morphology of the resin composition, which is one example of an atomic force microscope (AFM) image of a cross section of the resin composition. In the AFM image shown in Fig. 1, the dark section shows the component (x), and the bright section shows the component (y), in which the component (y) is dispersed as domains in the matrix of the component (x).

With the shape of the domains closer to a spherical shape, the matrix component more largely contributes to the viscoelasticity of the resin composition. Therefore, the decrease of the peak top intensity of tanδ due to the addition of the component (y) is prevented from occurring.

The average aspect ratio of the domains is preferably 1.0 to 3.0, more preferably 1.1 to 2.5, and further preferably 1.2 to 2.0, from the standpoint of the dispersibility.

In the description herein, the average aspect ratio is a value that is obtained in such a manner that the aspect ratios (length of major axis/length of minor axis) of 100 domains are measured through AFM observation, and the average value thereof is calculated, and in more detail, is measured by the method shown in the examples.

### <Production Method of Block Copolymer>

The production method of the block copolymers (i.e., the block copolymers (X0) and (Y0)) used for providing the resin composition according to an embodiment of the present invention includes a first step in which at least an aromatic vinyl compound and a conjugated diene compound used as monomers are subjected to polymerization reaction to provide a block copolymer containing a polymer block (A) containing a structural unit derived from the aromatic vinyl compound and a polymer block (B) containing a structural unit derived from the conjugated diene compound.

In the first step, the block copolymer can be produced, for example, by a solution polymerization method, an emulsion polymerization method, a solid phase polymerization method, or the like. Among these, a solution polymerization method is preferred, and for example, a known method, such as an ion polymerization method, e.g., anionic polymerization or cationic polymerization, and a radical polymerization method, may be applied thereto. Among these, an anionic polymerization method is preferred. In the anionic polymerization method, the aromatic vinyl compound and the conjugated diene compound are successively added in the presence of a solvent, an anionic polymerization initiator, and depending on necessity, a Lewis base, so as to provide a block copolymer, to which a coupling agent is added and reacted depending on necessity. In the case where the block copolymer (Y0) is produced, at least β-farnesene is used as the conjugated diene compound.

Examples of an organolithium compound capable of being used as the polymerization initiator for anionic polymerization include methyllithium, ethyllithium, n-butyllithium, sec-butyllithium, tert-butyllithium, and pentyllithium. Examples of a dilithium compound capable of being used as the polymerization initiator include naphthalenedilithium and dilithiohexylbenzene.

Examples of the coupling agent include dichloromethane, dibromomethane, dichloroethane, dibromoethane, dibromobenzene, phenyl benzoate, methyldimethoxysilane, trimethoxysilane, tetramethoxysilane, methyltrimethoxysilane, isobutyltrimethoxysilane, and γ-glycidoxypropyltrimethoxysilane.

The amounts of the polymerization initiator and the coupling agent used are appropriately determined depending on the target weight average molecular weight of the block copolymer. In general, the initiator, such as an alkyllithium compound or a dilithium compound, is preferably used in a proportion of 0.01 to 0.2 parts by mass per 100 parts by mass in total of the monomers used for the polymerization, such as the aromatic vinyl compound and the conjugated diene compound, and in the case where the coupling agent is used, the coupling agent is preferably used in a proportion of 0.001 to 0.8 parts by mass per 100 parts by mass in total of the monomers.

The solvent is not particularly limited, as far as not adversely affecting the anionic polymerization reaction, and examples thereof include an aliphatic hydrocarbon, such as cyclohexane, methylcyclohexane, n-hexane, and n-pentane; and an aromatic hydrocarbon, such as benzene, toluene, and xylene. The polymerization reaction is generally performed at a temperature of 0 to 100°C, and preferably 10 to 70°C, for 0.5 to 50 hours, and preferably 1 to 30 hours.

The addition of a Lewis base as a co-catalyst (vinylation agent) in the polymerization can enhance the content of the 3,4-bond, the 1,2-bond, and the 3,13-bond (i.e., the vinyl bond amount) of the polymer block (B).

Examples of Lewis bases include an ether compound, such as dimethyl ether, diethyl ether, tetrahydrofuran, and 2,2-di(2-tetrahydrofuryl) propane (DTHFP); a glycol ether compound, such as ethylene glycol dimethyl ether, diethylene glycol dimethyl ether, triethylene glycol dimethyl ether, and tetraethylene glycol dimethyl ether; an amine compound, such as triethylamine, N,N,N',N'-tetramethylenediamine, N,N,N',N'-tetramethylethylenediamine (TMEDA), and N-methylmorpholine; and a metal salt, such as a sodium or potassium salt of an aliphatic alcohol, e.g., sodium t-butylate, sodium t-amylate, and sodium isopentylate, and a sodium or potassium salt of an alicyclic alcohol, e.g., a dialkylsodium cyclohexanolate, for example, sodium mentholate.

In the Lewis bases above, tetrahydrofuran and DTHFP are preferably used from the standpoint of the vibration damping capability and the heat stability. DTHFP is more preferably used since a large vinyl bond amount can be obtained, a high hydrogenation rate can be easily achieved without the use of an excess amount of a hydrogenation catalyst, and both the excellent vibration damping capability and heat stability can be simultaneously achieved.

One kind of the Lewis base may be used alone, or two or more kinds thereof may be used in combination.

The amount of the Lewis base used may be determined by the vinyl bond amount of the conjugated diene compound unit of the polymer block (B) to be regulated. Therefore, the Lewis base is not limited in amount thereof added in a strict sense, and is generally used in a range of 0.1 to 1,000 mol, and preferably 1 to 100 mol, per 1 gram atom of lithium contained in the alkyllithium compound or the dilithium compound used as the polymerization initiator.

The polymerization reaction may be performed without the use of the Lewis base. In particular, the Lewis base is preferably not added in the first step from the standpoint of facilitating the reduction of the glass transition temperature of the hydrogenated product of the block copolymer.

In the first step, after performing the polymerization, the polymerization reaction is terminated by adding an alcohol compound, a carboxylic acid compound, or an active hydrogen compound, such as water.

### <Production Method of Hydrogenated Block Copolymer>

The production method of the hydrogenated block copolymers (X) and (Y) according to an embodiment of the present invention includes the first step described above and a second step of hydrogenating the block copolymers (X0) and (Y0).

In the second step, for example, hydrogenation reaction is performed in an inert organic solvent in the presence of a hydrogenation catalyst, so as to provide a hydrogenated copolymer.

The hydrogenation reaction may be performed under a hydrogen pressure of 0.1 to 20 MPa, preferably 0.5 to 15 MPa, and more preferably 0.5 to 5 MPa, at a reaction temperature of 20 to 250°C, preferably 50 to 180°C, and more preferably 70 to 180°C, for a reaction time of generally 0.1 to 100 hours, and preferably 1 to 50 hours.

Examples of the hydrogenation catalyst include Raney nickel; a Ziegler catalyst formed of a combination of a transition metal compound and an alkylaluminum compound, an alkyllithium compound, or the like; and a metallocene compound, from the standpoint of performing the hydrogenation reaction of the polymer block (B) while suppressing the nuclear hydrogenation of the aromatic vinyl compound. Among these, a Ziegler catalyst is preferred, a Ziegler catalyst formed of a combination of a transition metal compound and an alkylaluminum compound is more preferred, and a Ziegler catalyst formed of a combination of a nickel compound and an alkylaluminum compound (Al/Ni-based Ziegler catalyst) is further preferred from the same standpoint as above.

In particular, the use of DTHFP as the Lewis base in the first step as described above facilitates the production of the hydrogenated block copolymer having a high Tg through the second step. Accordingly, the hydrogenated block copolymer (X) having a high Tg suitable for the component (x) can be obtained.

The hydrogenated block copolymer formed in this manner can be obtained by pouring the polymerization reaction solution into methanol or the like, and filtering after agitation, followed by heating or drying under reduced pressure, or by pouring the polymerization reaction solution into hot water with steam to perform so-called steam stripping for removing the solvent by azeotropic distillation, followed by heating or drying under reduced pressure.

### [Production Method of Resin Composition]

The production method of the resin composition is not particularly limited, and a known method may be used. For example, the resin composition can be produced in such a manner that the hydrogenated product (X) of the block copolymer as the component (x) and the block copolymer (Y0) or the hydrogenated product (Y) thereof as the component (y) are mixed with a mixing device, such as a Henschel mixer, a V-blender, a ribbon blender, a tumbler blender, or a conical blender, or after the mixing, the mixture is melt-kneaded with a single-screw extruder, a twin-screw extruder, a kneader, or the like.

In the case where the resin composition contains the additive and the like described above, in addition to the component (x) and the component (y), the resin composition can be produced also in such a manner that the component (x), the component (y), and also the additive and the like are mixed with the mixing device described above, or after the mixing, the mixture is melt-kneaded with the device described above.

### [Foamable Composition and Crosslinked Foam Body]

The foamable composition according to an embodiment of the present invention contains: a resin composition (i) containing the component (x) and the component (y) and satisfying the requirements [1] to [4]; at least one kind of an olefin-based polymer (ii) selected from the group consisting of ethylene-propylene-diene copolymer rubber, an ethylene-vinyl acetate copolymer, and a polyethylene-based resin; a crosslinking agent (iii); and a foaming agent (iv). The crosslinked foam body according to an embodiment of the present invention is a crosslinked foam body of the foamable composition described above.

The olefin-based polymer (ii) is at least one kind of an olefin-based polymer selected from the group consisting of ethylene-propylene-diene copolymer (which may be hereinafter referred to as "EPDM") rubber, an ethylene-vinyl acetate copolymer (which may be hereinafter referred to as "EVA"), and a polyethylene-based resin.

Examples of the diene that can be used in the ethylene-propylene-diene copolymer rubber include a linear unconjugated diene, such as 1,4-hexadiene, 1,6-octadiene, 2-methyl-1,5-hexadiene, 6-methyl-1,6-heptadiene, and 7-methyl-1,6-octadiene; a cyclic unconjugated diene, such as cyclohexadiene, dichloropentadiene, methyltetrahydroindene, 5-vinylnorbornene, 5-ethylidene-2-norbomene, 5-methylene-2-norbornene, 5-isopropylidene-2-norbornene, and 6-chloromethyl-5-isopropenyl-2-norbornene; and a triene, such as 2,3-diisopropylidene-5-norbornene, 2-ethylidene-3-isopropylidene-5-norbomene, 2-propenyl-2,2-norbomadiene, 1,3,7-octatriene, and 1,4,9-decatriene.

The ethylene-vinyl acetate copolymer (EVA) is not particularly limited, and the content of vinyl acetate is preferably 5 to 45% by mass, more preferably 10 to 40% by mass, and further preferably 15 to 35% by mass, based on the total mass of the EVA. With a low content of vinyl acetate in the EVA, there is a tendency that the product becomes hard, and with a high content of vinyl acetate of the EVA, there is a tendency that the crosslinking is not performed sufficiently, making the mechanical strength of the crosslinked foam body insufficient. In the case where the content of vinyl acetate in the EVA is 5 to 45% by mass, the crosslinked foam body obtained from the foamable composition containing the resin composition (i) and the olefin-based polymer can have appropriate flexibility, can be good in vibration damping capability, sound insulation capability, gas venting properties, and adhesiveness to another member, such as a panel, can achieve weight reduction, and can retain the mechanical properties, such as the breaking strength.

The melt flow rate (MFR) of the EVA measured according to JIS K7210:2014 is preferably 0.3 g/10 min or more, more preferably 0.5 to 80.0 g/10 min, further preferably 1.0 to 50.0 g/10 min, and particularly preferably 1.2 to 30.0 g/10 min. The MFR herein is measured under conditions of 190°C and a load of 21.18 N. In the case where the melt flow rate of the EVA is in the range, a good moldability can be obtained.

The polyethylene-based resin means a polyethylene-based resin except for those containing an ethylene-vinyl acetate copolymer.

Examples of the polyethylene-based resin include a homopolymer of ethylene, such as high density polyethylene, medium density polyethylene, and low density polyethylene; and an ethylene-based copolymer, such as an ethylene-propylene copolymer, an ethylene-butene-1 copolymer, an ethylene-hexene copolymer, an ethylene-heptene copolymer, an ethylene-octene copolymer, an ethylene-4-methylpentene-1 copolymer, an ethylene acrylic acid copolymer, an ethylene-acrylate ester copolymer, an ethylene-methacrylic acid copolymer, and an ethylene-methacrylate ester copolymer.

The content of the structural unit derived from ethylene in the polyethylene-based resin is preferably 30 to 100% by mol, more preferably 40 to 95% by mol, and further preferably 50 to 90% by mol, based on the total structural units of the polyethylene-based resin, from the standpoint of the appropriate flexibility of the crosslinked foam body obtained from the foamable composition containing the resin composition (i) and the olefin-based polymer.

The content ratio of the olefin-based polymer (ii) and the resin composition (i) (olefin-based polymer (ii)/resin composition (i)) in the foamable composition in terms of mass ratio is preferably 1/99 to 99/1. The mass ratio (olefin-based polymer (ii)/resin composition (i)) is more preferably 5/95 to 95/5, further preferably 10/90 to 80/20, still further preferably 10/90 to 60/40, and particularly preferably 10/90 to 45/55. Within the range, the crosslinked foam body obtained from the foamable composition containing the resin composition (i) and the olefin-based polymer (ii) is good in vibration damping capability, sound insulation capability, gas venting properties, and adhesiveness to another member, such as a panel, can achieve weight reduction, and can retain the mechanical properties, such as the breaking strength.

The total content of the resin composition (i) and the olefin-based polymer (ii) in the foamable composition (100% by mass) is preferably 50% by mass or more, more preferably 80% by mass or more, further preferably 90% by mass or more, and still further preferably 95% by mass or more.

### (Crosslinking Agent)

Examples of the crosslinking agent (iii) for providing the crosslinked foam body include a radical generator, sulfur, and a sulfur compound.

Examples of the radical generator include an organic peroxide, for example, a dialkyl monoperoxide, such as dicumyl peroxide, di-t-butyl peroxide, and t-butylcumyl peroxide; a diperoxide, such as 2,5-dimethyl-2,5-di(t-butylperoxy)hexane, 2,5-dimethyl-2,5-di(t-butylperoxy)hexyne-3, bis(t-butyldioxyisopropyl)benzene, 1,1-bis(t-butylperoxy)-3,3,5-trimethylcyclohexane, and n-butyl-4,4-bis(t-butylperoxy) valerate; a diacyl peroxide, such as benzoyl peroxide, p-chlorobenzoyl peroxide, and 2,4-dichlorobenzoyl peroxide; a monoacylalkyl peroxide, such as t-butyl peroxybenzoate; a percarbonate, such as t-butylperoxyisopropyl carbonate; and a diacyl peroxide, such as diacetyl peroxide and lauroyl peroxide. One kind of these compounds may be used alone, or two or more kinds thereof may be used in combination. Among these, 2,5-dimethyl-2,5-di(t-butylperoxy)hexane and dicumyl peroxide are preferred from the standpoint of the reactivity.

In the case where the radical generator is used, the content thereof is preferably 0.01 to 15 parts by mass, more preferably 0.05 to 10 parts by mass, further preferably 0.1 to 5 parts by mass, and particularly preferably 0.1 to 3 parts by mass, per 100 parts by mass in total of the resin composition (i) and the olefin-based polymer (ii).

Examples of the sulfur compound include sulfur monochloride and sulfur dichloride.

In the case where sulfur or the sulfur compound is contained, the content thereof is preferably 0.1 to 20 parts by mass, more preferably 0.5 to 10 parts by mass, and further preferably 1 to 10 parts by mass, per 100 parts by mass in total of the resin composition (i) and the olefin-based polymer (ii).

Examples of the crosslinking agent (iii) for providing the crosslinked foam body also include a phenol-based resin, such as an alkylphenol resin and a brominated alkylphenol resin, a combination of p-quinone dioxime and lead dioxide, and a combination of p,p'-dibenzoylquinone dioxime and trilead tetraoxide.

The foamable composition may further contain a crosslinking aid and a crosslinking accelerator in addition to the crosslinking agent (iii).

Examples of the crosslinking aid include known crosslinking aids, for example, a polyfunctional monomer, such as trimethylolpropane trimethacrylate, trimethylolpropane triacrylate, triallyl trimellitate, triallyl 1,2,4-benzenetricarboxylate, triallyl isocyanurate, 1,6-hexanediol dimethacrylate, 1,9-nonanediol dimethacrylate, 1,10-decanediol dimethacrylate, polyethylene glycol dimethacrylate, ethylene glycol dimethacrylate, diethylene glycol dimethacrylate, triethylene glycol dimethacrylate, divinylbenzene, glycerol dimethacrylate, and 2-hydroxy-3-acryloyloxypropyl methacrylate; stannous chloride, ferric chloride, an organic sulfonic acid, polychloroprene, and chlorosulfonated polyethylene. Among these, triallyl isocyanurate is preferred.

One kind of the crosslinking aid may be used alone, or two or more kinds thereof may be used in combination.

In the case where the crosslinking aid is contained, the content thereof is preferably 0.1 to 40 parts by mass, more preferably 0.5 to 20 parts by mass, and further preferably 2 to 20 parts by mass, per 100 parts by mass in total of the resin composition (i) and the olefin-based polymer (ii).

Examples of the crosslinking accelerator include a thiazole compound, such as N,N-diisopropyl-2-benzothiazole sulfenamide, 2-mercaptobenzothiazole, and 2-(4-morpholinodithio)benzothiazole; a guanidine compound, such as diphenylguanidine and triphenylguanidine; an aldehyde-amine-based reaction product or an aldehyde-ammonia-based reaction product, such as a butylaldehyde-aniline reaction product and a hexamethylenetetramine-acetaldehyde reaction product; an imidazoline compound, such as 2-mercaptoimidazoline; a thiourea compound, such as thiocarbanilide, diethylurea, dibutylthiourea, trimethylthiourea, and di-o-tolylthiourea; dibenzothiazyldisulfide; a thiuram monosulfide compound or a thiuram polysulfide compound, such as tetramethylthiuram monosulfide, tetramethylthiuram disulfide, and pentamethylthiuram tetrasulfide; a thiocarbamate compound, such as zinc dimethyldithiocarbamate, zinc ethylphenyldithiocarbamate, sodium dimethyldithiocarbamate, selenium dimethyldithiocarbamate, and tellurium diethyldithiocarbamate; a xanthate compound, such as zinc dibutylxanthate; and zinc flower. One kind of the crosslinking accelerator may be used alone, or two or more kinds thereof may be used in combination.

### (Foaming Agent)

Examples of the foaming agent (iv) include an inorganic foaming agent, such as ammonium carbonate, ammonium hydrogen carbonate, sodium hydrogen carbonate, ammonium nitrite, sodium borohydride, and an azide compound; an organic foaming agent, for example, an N-nitroso-based compound, such as N,N'-dinitrosopentamethylenetetramine and N,N'-dimethyl-N,N'-dinitrosophthalamide; an azo-based compound, such as azobisisobutyronitrile, azodicarbonamide, and barium azodicarboxylate; an alkane fluoride, such as trichloromonofluoromethane and dichloromonofluoromethane; a sulfonylhydrazine-based compound, such as p-toluenesulfonyl hydrazide, diphenylsulfone-3,3'-disulfonyl hydrazide, 4,4'-oxybis(benzenesulfonyl hydrazide), and allylbis(sulfonyl hydrazide); a sulfonyl semicarbazide-based compound, such as p-toluylenesulfonyl semicarbazide and 4,4'-oxybis(benzenesulfonyl semicarbazide); and a triazole-based compound, such as 5-morpholyl-1,2,3,4-thiatriazole; and thermally expandable fine particles including a thermally expandable compound, such as isobutane and pentane, encapsulated in microcapsules formed of a thermoplastic resin of, for example, vinylidene chloride, acrylonitrile, an acrylate ester, or a methacrylate ester. One kind of these materials may be used alone, or two or more kinds thereof may be used in combination.

The content of the foaming agent (iv) is preferably 0.1 to 30 parts by mass, more preferably 0.2 to 25 parts by mass, further preferably 0.5 to 20 parts by mass, and particularly preferably 0.5 to 10 parts by mass, per 100 parts by mass in total of the resin composition (i) and the olefin-based polymer (ii).

Examples of a foaming aid include stearic acid and a salt thereof; a zinc compound, such as zinc oxide and zinc acetate; and a urea compound.

In the case where the foaming aid is contained, the content thereof is preferably 0.01 to 10 equivalent, more preferably 0.05 to 5 equivalent, further preferably 0.1 to 2 equivalent, and particularly preferably 0.3 to 1.8 equivalents, in terms of mass ratio with respect to the foaming agent (iv).

### (Additional Components)

The foamable composition may further contain an additional thermoplastic polymer. Examples of the additional thermoplastic polymer include a polyphenylene ether-based resin; a polyamide-based resin, such as polyamide 6, polyamide 6,6, polyamide 6,10, polyamide 11, polyamide 12, polyamide 6,12, polyhexamethylenediamine terephthalamide, polyhexamethylenediamine isophthalamide, and a xylene group-containing polyamide; a polyester-based resin, such as polyethylene terephthalate and polybutylene terephthalate; an acrylic-based resin, such as polymethyl acrylate and polymethyl methacrylate; a polyoxymethylene-based resin, such as a polyoxymethylene homopolymer and a polyoxymethylene copolymer; a styrene-based resin, such as a styrene homopolymer, an acrylonitrile-styrene resin, and an acrylonitrile-styrene-butadiene resin; a polycarbonate resin; a styrene-based elastomer and a hydrogenated product thereof or a modified product thereof, such as styrene-butadiene copolymer rubber and styrene-isoprene copolymer rubber; natural rubber; chloroprene rubber; acrylic rubber; acrylonitrile-butadiene rubber; epichlorohydrin rubber; silicone rubber; chlorosulfonated polyethylene; urethane rubber; a polyurethane-based elastomer; a polyamide-based elastomer; a polyester-based elastomer; and a soft vinyl chloride resin.

The foamable composition may further contain various additives in such a range that does not impair the effects of the present invention. Examples of the additives include a processing aid, a reinforcing material, a filler, a plasticizer, a continuous pore foaming agent, a heat stabilizer, a light stabilizer, an ultraviolet ray absorbent, an antioxidant, a lubricant, an antistatic agent, an antimicrobial agent, an antifungal agent, a dispersant, and a colorant.

The foamable composition may contain a processing aid depending on necessity. The processing aid exhibits functions including improvement in processability, acceleration of dispersion of a filler, and the like. Examples of the processing aid include a fatty acid amide.

In the case where the processing aid is contained, the content of the processing aid in the foamable composition is generally 0.1 to 5 parts by mass, and preferably 0.5 to 4 parts by mass, per 100 parts by mass in total of the resin composition (i) and the olefin-based polymer (ii).

Examples of the reinforcing material and/or the filler include the materials exemplified as the additive capable of being added to the resin composition (i).

In the case where the reinforcing material and/or the filler are contained, the content of the reinforcing material and/or the filler in the foamable composition is generally 10 to 200 parts by mass, preferably 20 to 180 parts by mass, and more preferably 30 to 160 parts by mass, per 100 parts by mass in total of the resin composition (i) and the olefin-based polymer (ii). In the case where the content of the reinforcing material and/or the filler is in the range, the molding processability can be improved, and the mechanical properties, such as the breaking strength, of the crosslinked foam body obtained from the foamable composition can be retained.

Examples of the plasticizer include a petroleum process oil, such as a paraffin-based process oil and a naphthene-based process oil; an aromatic process oil; a phthalic acid derivative, such as dioctyl phthalate and dibutyl phthalate; an ester-based plasticizer, such as di-2-ethylhexyl phthalate, dihexyl phthalate, dinonyl phthalate, di-2-ethylhexyl adipate, dioctyl adipate, and dinonyl adipate; a white oil; a mineral oil; a vegetable oil-based plasticizer, such as a peanut oil and rosin; liquid paraffin; and a synthesized plasticizer, such as a liquid cooligomer of ethylene and an α-olefin.

In the case where the plasticizer is contained, the content thereof is preferably 0.5 to 200 parts by mass, more preferably 0.5 to 100 parts by mass, further preferably 1 to 50 parts by mass, particularly preferably 1.5 to 25 parts by mass, and most preferably 1.5 to 10 parts by mass, per 100 parts by mass in total of the foamable composition.

Examples of the light stabilizer, the ultraviolet ray absorbent, and the antioxidant include the materials exemplified as the additive capable of being added to the resin composition (i).

In the case where any one or two or more of the light stabilizer, the ultraviolet ray absorbent, and the antioxidant are contained, the content thereof is generally 0.01 to 10.0 parts by mass, preferably 0.3 to 7.0 parts by mass, and more preferably 0.5 to 5.0 parts by mass, per 100 parts by mass in total of the resin composition (i) and the olefin-based polymer (ii). A total content of the light stabilizer, the ultraviolet ray absorbent, and the antioxidant that is in the range is preferred since the resulting crosslinked foam body does not suffer deposits (bloom) formed on the surface thereof, preventing vulcanization inhibition from occurring.

### [Crosslinking Method]

In the foamable composition, it is preferred that the resin compositions (i) are crosslinked, the resin composition (i) and the olefin-based polymer (ii) are crosslinked, or the olefin-based polymers (ii) are crosslinked. Examples of the crosslinking method include a method of appropriately adding a crosslinking agent, a crosslinking aid, and a crosslinking accelerator to the resin composition (i) and the olefin-based polymer (ii), followed by kneading (crosslinking method 1), a resin crosslinking method (crosslinking method 2), a quinoid crosslinking method (crosslinking method 3), and a method using an active energy ray (crosslinking method 4).

### <Crosslinking Method 1>

In the foamable composition for providing the crosslinked foam body of the present invention, a crosslinking agent, a crosslinking aid, and a crosslinking accelerator may be appropriately added to the resin composition (i) and the olefin-based polymer (ii), followed by kneading, so as to crosslink the polymer block (B) of the resin composition (i) and the olefin-based polymer (ii).

For example, in addition to the crosslinking agent, such as the radical generator, the crosslinking aid, such as the polyfunctional monomer, and the crosslinking accelerator, such as dibenzothiazyldisulfide and tetramethylthiuram disulfide (i.e., a so-called disulfide compound), may be used as needed.

Examples of the case where the crosslinking is performed by the method include a method of melt-kneading the foamable composition containing the radical generator and, depending on necessity, the additional thermoplastic polymer, under heating. The heating temperature is preferably 100 to 230°C. The melt-kneading may be performed by a batch method or a continuous method with a device, such as an extruder, a kneader, a roll, or a plastograph. The crosslinking reaction may be allowed to proceed in the melt-kneading step. In the case where a crosslinked foam body is to be produced, for example, the foaming reaction and the crosslinking reaction may be allowed to proceed simultaneously. In this case, the heating temperature in melt-kneading may be lower than the decomposition temperature of the foaming agent.

In the case where sulfur or a sulfur compound is used as the crosslinking agent, it is extremely preferred to use a crosslinking accelerator, such as a thiazole compound, a guanidine compound, a butyraldehyde-aniline reaction product, a hexamethylenetetramine-acetaldehyde reaction product, an aldehyde-amine-based reaction product, a thiuram-based compound, and a dithiocarbamate salt-based compound, in combination.

In the case where the crosslinking is performed by the method, the crosslinking can be formed in such a manner that the crosslinking agent, the crosslinking accelerator, and the like are kneaded with a mixer, such as a roll or a Banbury mixer, preferably at 50 to 250°C (more preferably at 80 to 200°C), and then retained preferably at 60°C or more (more preferably at 90 to 250°C) generally for 1 minute to 2 hours (preferably for 5 minutes to 1 hour).

### <Crosslinking Method 2>

In the crosslinking method by the resin crosslinking method, a phenol resin, such as an alkylphenol resin or a brominated alkylphenol resin, is used as a crosslinking agent, and stannous chloride, ferric chloride, an organic sulfonic acid, polychloroprene, chlorosulfonated polyethylene, or the like is used as a crosslinking aid.

In the case where the crosslinking is performed by the method, the crosslinking temperature is preferably 100 to 250°C, and more preferably 130 to 220°C. In the case where the resin crosslinking is performed, it is extremely preferred to use a crosslinking accelerator in combination.

### <Crosslinking Method 3>

In the crosslinking method by the quinoid crosslinking method, a combination of p-quinone dioxime and lead dioxide, a combination of p,p'-dibenzoylquinone dioxime and trilead tetraoxide, or the like is used as a crosslinking agent.

In the case where the crosslinking is performed by the method, the crosslinking temperature is preferably 90 to 250°C, and more preferably 110 to 220°C. In the case where the quinoid crosslinking is performed, it is extremely preferred to use a crosslinking accelerator in combination.

### <Crosslinking Method 4>

Examples of the active energy ray that can be used in the crosslinking method by the active energy ray crosslinking method include a particle beam, an electromagnetic wave, and a combination thereof. Examples of the particle beam include an electron beam (EB) and an α-ray, and examples of the electromagnetic wave include an ultraviolet (UV) ray, visible light, an infrared ray, a γ-ray, and an X-ray. Among these, an electron beam (EB) and an ultraviolet (UV) ray are preferred.

The irradiation time and the irradiation dose are not particularly limited, and may be appropriately selected depending on the extent of crosslinking.

### <Production Method of Foamable Composition and Crosslinked Foam Body>

The production method of the foamable composition is not particularly limited, and the composition can be produced in such a manner that the resin composition (i), the olefin-based polymer (ii), the crosslinking agent (iii), the foaming agent (iv), and the additional components mixed depending on necessity are mixed with a mixing device, such as a Henschel mixer, a V-blender, a ribbon blender, a tumbler blender, or a conical blender, or after the mixing, the mixture is melt-kneaded with a single-screw extruder, a twin-screw extruder, a kneader, a roll kneader, or the like. The temperature in melt-kneading may be appropriately set, and in general, is preferably 80 to 300°C, and more preferably 100 to 250°C.

The crosslinked foam body according to the present embodiment can be obtained through foam molding of the foamable composition. In the present invention, the foaming method used may be a chemical method of foaming through decomposition or reaction of a foaming agent, a physical method, such as supercritical foaming and water foaming, and a combination of the methods. The method of producing the crosslinked foam body is not particularly limited, and may be a method that is ordinarily used for foam molding, such as injection foam molding, extrusion foam molding, and press foam molding.

The crosslinked foam body can be obtained, for example, in such a manner that a mixture obtained by dry-blending the foaming agent (iv) with the resin composition (i), the olefin-based polymer (ii), and the crosslinking agent (iii), is injection foam-molded into a mold having a cavity having a target shape. In alternative, the crosslinked foam body having a target shape can be obtained in such a manner that the mixture is extrusion foam-molded into an optional shape, such as a cylindrical shape, and the molded article is cut into the target dimension. The foam molding may be performed with a material obtained by melt-kneading the components and the foaming agent in producing the foamable composition. In this case, the kneading temperature is preferably the decomposition temperature of the foaming agent or less.

The production method of the crosslinked foam body is not particularly limited. Examples of the production method of the crosslinked foam body include a melt foam molding method and a solid state foam molding method.

The melt foam molding method is a method of forming pores in the heat-melted foamable composition, and includes a method of kneading the foamable composition, and then molding the composition while foaming the foaming agent in the foamable composition (two-step method), and a method of molding the composition while blowing gas into the extruder (one-step method), and specific examples thereof include an injection foaming method and an extrusion foaming method.

The solid state foaming method is a method of melting the foamable composition, followed by solidifying, and then forming pores in the solidified foamable composition, and examples thereof include bead foaming and press foaming.

The foamable composition may be crosslinked and then foamed, may be foamed and then crosslinked through irradiation of an electron beam or the like, and may be crosslinked while foaming.

The foam structure of the crosslinked foam body may be a closed pore foam type having pores that are not in contact with each other, or may be an open pore foam type having pores that are partially in contact with each other. In the description herein, the open pores mean continuous pores that are connected to each other or to the exterior.

The crosslinked foam body of the closed pore foam type is preferred in the point that the crosslinked foam body can prevent water from invading therein, and the waterproof capability, the dustproof capability, and the mechanical properties, such as the breaking strength thereof are excellent.

The crosslinked foam body of the open pore foam type is preferred in the point that in adhering the crosslinked foam body to another member with an adhesive or the like, the crosslinked foam body has good permeability of the adhesive, and particularly in the case where the adhesive is a moisture curing type adhesive, can be firmly adhered through absorption of moisture via the open pores. In the case where the crosslinked foam body is used as dam rubber for preventing an adhesive from spreading to portions other than the portion to be adhered, the crosslinked foam body of the open pore foam type is preferred since the open pores of the crosslinked foam body can absorb the adhesive to reliably prevent the adhesive from spreading unnecessarily, and in the case where a moisture curing type adhesive is used, moisture in the air can be supplied via the open pores, and gas, such as carbon dioxide, can be exhausted to the exterior via the open pores.

### <Properties of Crosslinked Foam Body>

The apparent density (specific gravity) of the crosslinked foam body is preferably 20 to 500 kg/m³. In the case where the apparent density of the crosslinked foam body is in the range, the crosslinked foam body can exhibit excellent vibration damping capability and sound insulating capability while reducing the weight thereof, and can retain the mechanical properties, such as the breaking strength. The moldability and the workability thereof can also be retained.

The apparent density of the crosslinked foam body is more preferably 30 to 400 kg/m³, further preferably 70 to 300 kg/m³, still further preferably 110 to 280 kg/m³, and particularly preferably 120 to 270 kg/m³, and the apparent density can be appropriately set depending on the target frequency range.

The foaming ratio of the crosslinked foam body is not particularly limited, and the foaming ratio of the crosslinked foam body is preferably 1.3 to 30 times. The crosslinked foam body having a foaming ratio of 1.3 to 3.0 times can be favorably used as an exterior component, such as a molding, a weather strip sponge, and a glass run channel, of a transporting machine, such as an automobile, a boat or ship, a rail vehicle, and an aircraft, and the crosslinked body having a foam ratio of more than 3.0 times and 30 times or less can be favorably used as dam rubber for a transporting machine, dam rubber for a building, and heat insulating sponge.

The peak top intensity of tanδ of the crosslinked foam body in a measurement temperature of -30 to +50°C is preferably 0.1 or more, more preferably 0.2 or more, further preferably 0.3 or more, still further preferably 0.4 or more, and particularly preferably 0.5 or more, from the standpoint of facilitating the securement of the vibration damping capability around room temperature. The upper limit thereof is not particularly limited, and is, for example, 3.0 or less from the standpoint of the easiness in production. The peak top intensity of tanδ of the crosslinked foam body is a value that is measured according to JIS K6394:2007 while applying vibration having a frequency of 10 Hz at a strain amount of 1% and heating from -30°C to +50°C at a constant rate of 2°C/min.

The compression storage elastic modulus E' at -20°C of the crosslinked foam body measured according to JIS K6394:2007 at a frequency of 10 Hz and a strain amount of 1% is preferably 100 MPa or less, more preferably 70 MPa or less, further preferably 50 MPa or less, and particularly preferably 40 MPa or less, from the standpoint of the flexibility at low temperature. The lower limit of the compression storage elastic modulus E' is not particularly limited, and is, for example, 0.1 MPa from the standpoint of the mechanical strength. In other words, the compression storage elastic modulus E' at -20°C of the crosslinked foam body is preferably 0.1 to 100 MPa.

The compression storage elastic modulus E' may be measured specifically by the procedure shown in the examples.

The rebound elastic modulus of the crosslinked foam body measured according to JIS K6400:2011 is preferably 30% or less, more preferably 25% or less further preferably 20% or less, and still further preferably 15% or less, at 0°C, and is preferably 30% or less, more preferably 25% or less, further preferably 20% or less, and still further preferably 16% or less, at 20°C, from the standpoint of the impact absorbability.

The hardness (type C) of the crosslinked foam body measured according to JIS K7312:1996 is preferably 1 to 80, more preferably 3 to 70, and further preferably 5 to 60, at 0°C, and is preferably 1 to 80, more preferably 3 to 70, and further preferably 5 to 60, at 20°C, from the standpoint of the flexibility and the mechanical strength.

### Examples

The present invention will be described in more detail with reference to examples below, but the present invention is not limited to the examples.

### <Measurement and Evaluation of Properties of Hydrogenated Block Copolymer and Resin Composition>

The measurement of the properties of the hydrogenated block copolymers TPE-1 to TPE-7 obtained in Production Examples below, and the measurement and evaluation of the properties of the resin compositions obtained in Examples and Comparative Examples below were performed in the following procedures.

### (Content of Polymer Block (A))

The hydrogenated block copolymer was dissolved in CDCl₃ and subjected to a ¹H-NMR measurement (device: "Advance 400 Nano bay" (available from Bruker Corporation), measurement temperature: 30°C), and the content of the polymer block (A) was calculated from the ratio of the peak area derived from styrene and the peak area derived from the conjugated diene. The specimens after completing the polymerization of the blocks in the production of the hydrogenated block copolymer each were similarly measured, thereby the content of the aromatic vinyl compound unit in the polymer block (A) was measured.

### (Vinyl Bond Amount of Polymer Block (B))

The block copolymer before hydrogenation was dissolved in CDCl₃ and subjected to a ¹H-NMR measurement (device: "Advance 400 Nano bay" (available from Bruker Corporation), measurement temperature: 30°C). The vinyl bond amount was calculated from the ratio of the peak areas corresponding to the 3,4-bond unit and the 1,2-bond unit in the isoprene structural units, the 3,13-bond unit and 1,2-bond unit in β-farnesene, and the 1,2-bond unit in the butadiene structural units, with respect to the total peak area of the structural units derived from isoprene and butadiene (TPE-1), the structural unit derived from isoprene (TPE-2, TPE-3, TPE-6, and TPE-7), the structural unit derived from β-farnesene (TPE-4), or the structural units derived from butadiene and β-farnesene (TPE-5).

### (Hydrogenation Rate of Polymer Block (B))

The hydrogenated block copolymer was dissolved in CDCl₃ and subjected to a ¹H-NMR measurement (device: "Advance 400 Nano bay" (available from Bruker Corporation), measurement temperature: 30°C), and the hydrogenation rate was calculated from the ratio of the peak area derived from hydrogenated β-farnesene, hydrogenated isoprene, or hydrogenated butadiene, with respect to the peak area derived from the residual olefin of β-farnesene, isoprene, or butadiene.

### (Weight Average Molecular Weight (Mw))

The polystyrene conversion weight average molecular weight (Mw) of the hydrogenated block copolymer was obtained by the gel permeation chromatography (GPC) measurement under the following condition. The polymer block (A) alone before adding the conjugated diene compound was also measured for Mw in the same manner.

### <GPC Measurement Device and Measurement Condition>

Device: GPC Device "HLC-8020" (available from Tosoh Corporation)
Separation columns: "TSKgel G4000HX" × 2, available from Tosoh Corporation, connected in series
Eluent: tetrahydrofuran
Eluent flow rate: 0.7 mL/min
Sample concentration: 5 mg/10 mL
Column temperature: 40°C
Detector: Differential refractive index (RI) detector
Calibration curve: prepared with standard polystyrene

### (tanδ and Shear Storage Elastic Modulus G' of Hydrogenated Block Copolymer and Resin Composition)

For the following measurement, a single-layer sheet having a thickness of 1.0 mm was produced by pressurizing each of the hydrogenated block copolymers obtained in Production Examples and the resin compositions obtained in Examples and Comparative Examples at a temperature of 230°C and a pressure of 10 MPa for 3 minutes. The single-layer sheet was cut into a disk shape, which was used as a test sheet.

The measurement was performed according to JIS K7244-10:2005 with a strain control type dynamic viscoelastometer "ARES-G2" (available from TA Instruments Inc.) having a disk diameter of 8 mm, as a parallel plate vibration rheometer.

After completely filling the space between the two flat plates with the test sheet, the temperature was increased from -80°C to +100°C at a constant rate of 3°C/min while applying vibration having a frequency of 1 Hz to the specimen with a strain amount of 0.1% and a shearing mode, and thereby the maximum value of the peak intensity (i.e., the peak top intensity) of tanδ at a measurement temperature of -30 to +50°C and the temperature at which the maximum value was obtained (i.e., the peak top temperature) were obtained for the hydrogenated block copolymer or the resin composition. The tanδ at 0°C, 20°C, and 40°C, and the shear storage elastic modulus G' at -20°C of each of the resin compositions were obtained in the same manner.

### (Glass Transition Temperature (Tg))

The Tg of the hydrogenated block copolymer was measured with DSC250, available from TA Instruments Inc., by increasing the temperature from -100°C to +80°C at a rate of 10°C/min, and the shift point of the base line of the DSC curve (specifically the intersection point of the line of the intermediate point between the base lines before and after the specific heat changed and the DSC curve) was designated as the Tg.

### (Melt Flow Rate (MFR))

The hydrogenated products of the block copolymers obtained in Production Examples and the resin compositions obtained in Examples and Comparative Examples each were measured for the flow rate (g/10 min) of the specimen according to JIS K7210:2014 with a melt indexer under conditions of a temperature of 230°C and a load of 2,160 g.

### (Biobased Content)

The resin compositions obtained in Examples and Comparative Examples and the crosslinked foam bodies obtained in Examples and Comparative Examples each were measured for the biobased content according to ASTM D6866-20. Specifically, the resin composition or the crosslinked foam body was combusted, and CO₂ generated through the combustion of the resin composition was quantitatively determined. The quantitatively determined CO₂ was measured for the concentration of ¹⁴C with an accelerator mass spectrometer (AMS). The biobased content was calculated by comparing the ¹⁴C concentration of CO₂ in the air and the measured concentration of ¹⁴C.

### (Average Aspect Ratio of Domains in Resin Composition)

The resin compositions obtained in Example 2 and Comparative Example 1 each were cut to provide a cross section with Cryo Ultramicrotome (EM UC7, EM FC7, available from Leica Microsystems GmbH), and the cross section was observed with an atomic force microscope (AFM) at a tapping mode to provide a phase contrast image.

On the phase contrast image, 100 domains were measured for the aspect ratio (length of major axis/length of minor axis), and the average value calculated therefrom was designated as the average aspect ratio of the domains.

### (Foaming Ratio of Crosslinked Foam Body)

A test piece having a length of 25 mm, a width of 25 mm, and a thickness of 2 mm including no molding surface was cut out from each of the compositions before and after foaming of Examples and Comparative Examples, and the foaming ratio of the crosslinked foam body was calculated from the weights per unit volume before and after foaming.

### (Specific Gravity of Crosslinked Foam Body)

The crosslinked foam bodies obtained in Examples and Comparative Examples each were measured for the specific gravity according to JIS K7222:2005.

### (tanδ and Compression Storage Elastic Modulus E' of Crosslinked Foam Body)

For the following measurement, a test piece having a diameter of 8 mm and a thickness of 5 mm including no molding surface was cut out from each of the foam bodies obtained in Examples and Comparative Examples.

The measurement was performed according to JIS K6394:2007 by using a dynamic viscoelasticity device "Eplexor SOON" (available from Netzsch Geratebau GmbH).

The temperature of the test piece was increased from -30°C to +50°C at a constant rate of 2°C/min while applying vibration having a frequency of 10 Hz thereto with a strain amount of 1% and a compression mode, and thereby the tanδ at 0°C, 20°C, and 40°C of the crosslinked foam bodies obtained in Examples and Comparative Examples were measured. The compression storage elastic modulus E' at -20°C was measured in the same manner.

### (Rebound Elastic Modulus of Crosslinked Foam Body)

Three plies of sheets having a length of 50 mm, a width of 50 mm, and a thickness of 20 mm including no molding surface were cut out from each of the crosslinked foam bodies obtained in Examples and Comparative Examples, and the sheets were laminated to provide a laminate having a length of 50 mm, a width of 50 mm, and a thickness of 60 mm to obtain a test specimen. The test specimen was subjected to a rebound elasticity test at 0°C and 20°C by a method according to JIS K6400-3:2011, so as to measure the rebound elastic modulus.

### (Hardness of Crosslinked Foam Body)

The crosslinked foam bodies obtained in Examples and Comparative Examples each were measured for the hardness (type C) at 0°C and 20°C according to JIS K7312:1996 with a type C durometer (available from Kobunshi Keiki Co., Ltd.).

### [Production Example 1]

### <Production of Hydrogenated Product TPE-1 of Block Copolymer>

A nitrogen-purged and dried pressure-resistant container was charged with 50 kg of cyclohexane as a solvent and 57 g of a cyclohexane solution of sec-butyllithium having a concentration of 10.5% by mass as an anionic polymerization initiator (substantial addition amount of sec-butyllithium: 6.0 g).

After the temperature in the pressure-resistant container was raised to 50°C, 0.8 kg of styrene (1) was added and polymerized for 1 hour, 42 g of 2,2-di(2-tetrahydrofuryl)propane (DTHFP) was added as a Lewis base at a temperature in the container of 50°C, a liquid mixture of 6.1 kg of isoprene and 4.9 kg of butadiene was added and polymerized for 2 hours, and 0.8 kg of styrene (2) was further added and polymerized for 1 hour, thereby providing a reaction liquid containing a polystyrene-poly(isoprene-butadiene)-polystyrene triblock copolymer.

A Ziegler-based hydrogenation catalyst formed from nickel octylate and trimethylaluminum was added to the reaction liquid under a hydrogen atmosphere, which were reacted at 80°C under a hydrogen pressure of 1 MPa for 5 hours. After allowing the reaction liquid to cool and release the pressure, the catalyst was removed by washing with water, and vacuum drying was performed to provide a hydrogenated product TPE-1 of a polystyrene-poly(isoprene-butadiene)-polystyrene triblock copolymer.

### [Production Examples 2 to 5]

### <Production of Hydrogenated Products TPE-2 to TPE-5 of Block Copolymers>

The hydrogenated block copolymers TPE-2 to TPE-5 were produced in the same manner as in Production Example 1 except that the raw materials and the amounts thereof used were changed as shown in Table 1.

### [Production Example 6]

### <Production of Hydrogenated Product TPE-6 of Block Copolymer>

A nitrogen-purged and dried pressure-resistant container was charged with 50 kg of cyclohexane as a solvent, 227 g of a cyclohexane solution of sec-butyllithium having a concentration of 10.5% by mass as an anionic polymerization initiator (substantial addition amount of sec-butyllithium: 23.9 g), and 100 g of tetrahydrofuran as a Lewis base.

After the temperature in the pressure-resistant container was raised to 50°C, 7.4 kg of β-farnesene was added and polymerized for 2 hours, subsequently 3.0 kg of styrene (1) was added and polymerized for 1 hour, and 4.6 kg of butadiene was added and polymerized for 1 hour. Subsequently, 100 g of phenyl benzoate as a coupling agent was added to the polymerization reaction liquid, and polymerized for 1 hour to provide a reaction liquid containing a poly(β-farnesene)-polystyrene-polybutadiene-polystyrene-poly(β-farnesene) pentablock copolymer.

A Ziegler-based hydrogenation catalyst formed from nickel octylate and trimethylaluminum was added to the reaction liquid under a hydrogen atmosphere, which were reacted at 80°C under a hydrogen pressure of 1 MPa for 5 hours. After allowing the reaction liquid to cool and release the pressure, the catalyst was removed by washing with water, and vacuum drying was performed to provide a hydrogenated product TPE-6 of a poly(β-farnesene)-polystyrene-polybutadiene-polystyrene-poly(β-farnesene) pentablock copolymer.

### [Comparative Production Examples 1 and 2]

### <Production of Hydrogenated Products TPE-7 and TPE-8 of Block Copolymers>

The hydrogenated block copolymers TPE-7 and TPE-8 were produced in the same manner as in Production Example 1 except that the raw materials and the amounts thereof used were changed as shown in Table 1.

**Table 1**

| | | | Production Example | | | | | | Comparative Production Example | |
|---|---|---|---|---|---|---|---|---|---|---|
| | | | 1 | 2 | 3 | 4 | 5 | 6 | 1 | 2 |
| Hydrogenated product of block copolymer | | | TPE-1 | TPE-2 | TPE-3 | TPE-4 | TPE-5 | TPE-6 | TPE-7 | TPE-8 |
| Amount used (kg) | Cyclohexane | | 50 | 50 | 50 | 50 | 50 | 50 | 50 | 50 |
| | sec-Butyllithium (10.5% by mass cyclohexane solution) | | 0.057 | 0.078 | 0.114 | 0.098 | 0.055 | 0.227 | 0.545 | 0.146 |
| | (A) | Styrene (1) | 0.8 | 0.9 | 0.5 | 1.3 | 1.3 | 3.0 | 2.2 | 1.3 |
| | | Styrene (2) | 0.8 | 0.9 | 0.5 | 1.3 | 1.3 | 0.0 | 2.2 | 1.3 |
| | (B) | Isoprene | 6.1 | 13.1 | 11.5 | 10 | 0 | 0 | 10.4 | 12.2 |
| | | Butadiene | 4.9 | 0 | 0 | 0 | 0 | 4.6 | 0 | 0 |
| | | β-Farnesene | 0 | 0 | 0 | 0 | 12.2 | 7.4 | 0 | 0 |
| | Lewis base | Tetrahydrofuran | 0 | 0 | 0.24 | 0.28 | 0 | 0.1 | 0 | 0 |
| | | DTHFP | 0.042 | 0.029 | 0 | 0 | 0 | 0 | 0 | 0 |
| | Coupling agent | Phenyl benzoate | 0 | 0 | 0 | 0 | 0 | 0.1 | 0 | 0 |

The hydrogenated products of the block copolymers each were measured for the properties according to the measurement methods described above. The measurement results are shown Table 2 with the compositions thereof.

**Table 2**

| | Production Example | | | | | | Comparative Production Example | |
|---|---|---|---|---|---|---|---|---|
| | 1 | 2 | 3 | 4 | 5 | 6 | 1 | 2 |
| Hydrogenated product of block copolymer | TPE-1 | TPE-2 | TPE-3 | TPE-4 | TPE-5 | TPE-6 | TPE-7 | TPE-8 |
| Structural unit of polymer block (A) | St | St | St | St | St | St | St | St |
| Component constituting polymer block (B) | Ip/Bd | Ip | Ip | Ip | Far | Far, Bd | Ip | Ip |
| Mass ratio of components constituting polymer block (B) | 55/45 | 100 | 100 | 100 | 100 | 63, 37 | 100 | 100 |
| Molar ratio of components constituting polymer block (B) | 50/50 | 100 | 100 | 100 | 100 | 30, 70 | 100 | 100 |
| Polymer structure | A-B-A | A-B-A | A-B-A | A-B-A | A-B-A | *1 | A-B-A | A-B-A |
| Content of polymer block (A) (% by mass) | 12 | 12 | 20 | 20 | 18 | 20 | 30 | 18 |
| Weight average molecular weight of hydrogenated product of block copolymer | 185,000 | 140,000 | 230,000 | 100,000 | 170,000 | 100,000 | 45,000 | 90,000 |
| Hydrogenation rate of polymer block (B) (% by mol) | 97 | 88 | 90 | 88 | 90 | 90 | 99 | 99 |
| Vinyl bond amount of polymer block (B) (% by mol) | 79 | 81 | 55 | 60 | 7 | 15 | 7 | 7 |
| MFR (230°C, 2.16 kg) (g/10 min) | 1 | 15 | 2 | 4 | No flow | 50 | 70 | 5 |
| Glass transition temperature (°C) | 4 | 20 | -20 | -15 | -56 | -52 | -55 | -55 |
| Peak top temperature of tan6 (°C) | 15 | 32 | -10 | -5 | -50 | -48 | -52 | -53 |
| Peak top intensity of tan6 | 2.2 | 2.2 | 2.5 | 2.1 | 2.4 | 1.3 | 1.5 | 2.0 |

| | | | | | | | | |
|---|---|---|---|---|---|---|---|---|
| *1: Hydrogenated product of poly(β-farnesene)-polystyrene-polybutadiene-polystyrene-poly(β-farnesene) pentablock copolymer | | | | | | | | |

In Table 2, "Ip" represents isoprene, "Bd" represents butadiene, and "Far" represents β-farnesene.

In Table 2, "No flow" means that the melt flow rate was unable to measure due to the poor flowability.

As shown in Table 2, the hydrogenated block copolymers TPE-1 to TPE-4 satisfy the requirement [1] described above, and the hydrogenated block copolymers TPE-5 and TPE-6 satisfy the requirements [2] and [4] described above.

The peak top intensities of tanδ of the hydrogenated block copolymers TPE-1 to TPE-4 each show a value of 1.0 or more.

The peak top temperature of tanδ of the hydrogenated block copolymers TPE-1 to TPE-4 each are in a range of -20 to +45°C, and the peak top temperature of tanδ of the hydrogenated block copolymers TPE-5 and TPE-6 each are in a range of -70 to -30°C.

On the other hand, TPE-7 and TPE-8 of Comparative Production Examples satisfy the requirement [2] described above, but do not satisfy the requirement [4] described above since β-farnesene is not contained.

### [Example 1]

90 parts by mass of the hydrogenated block copolymer TPE-1 and 10 parts by mass of the hydrogenated block copolymer TPE-6 were used and melt-kneaded with a twin-screw extruder ("ZSK26Mc", available from Coperion GmbH) under conditions of a cylinder temperature of 230°C and a screw rotation number of 300 rpm, so as to produce a resin composition.

### [Examples 2 to 4 and Comparative Examples 1 and 2]

Resin compositions were produced in the same manner as in Example 1 except that the composition of the resins was changed as shown in Table 3.

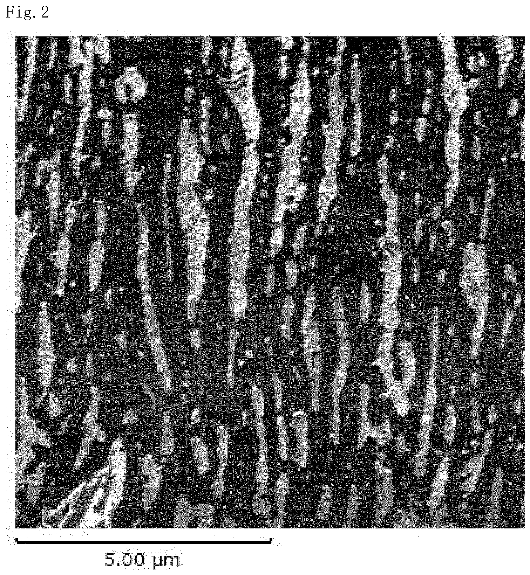

The resin compositions each were measured for the properties according to the measurement methods described above. The measurement results are shown in Table 3 with the compositions thereof. The AFM image of the resin composition of Example 2 is shown in Fig. 1, and the AFM image of the resin composition of Comparative Example 1 is shown in Fig. 2.

**Table 3**

| | | | Example 1 | Example 2 | Example 3 | Example 4 | Comparative Example 1 | Comparative Example 2 |
|---|---|---|---|---|---|---|---|---|
| Composition of resin (part by mass) | Component (x) | TPE-1 | 90 | 70 | 50 | - | 70 | - |
| | | TPE-2 | - | - | - | 70 | - | 50 |
| | Component (y) | TPE-6 | 10 | 30 | 50 | 30 | - | - |
| | Component other than (x) and (y) | TPE-7 | - | - | - | - | 30 | - |
| | | TPE-8 | - | - | - | - | - | 50 |
| Biobased content (% by mass) | | | 5 | 15 | 25 | 15 | 0 | 0 |
| tanδ (shear, 1 Hz) | | 0°C | 0.25 | 0.34 | 0.40 | 0.04 | 0.18 | 0.04 |
| | | 20°C | 1.31 | 0.96 | 0.71 | 0.34 | 0.72 | 0.24 |
| | | 40°C | 0.35 | 0.29 | 0.23 | 1.04 | 0.25 | 0.59 |
| Peak top intensity of tanδ | | | 2.1 | 1.7 | 1.5 | 1.5 | 0.8 | 1.0 |
| Peak top temperature of tanδ (°C) | | | 13 | 11 | 9 | 32 | 18 | 30 |
| G' at -20°C (MPa) | | | 200 | 150 | 110 | 200 | 48 | 110 |
| MFR (230°C, 2.16 kg) (g/10 min) | | | 3 | 7 | 24 | 32 | 3 | 8 |

As shown in Table 3, the resin composition of Example 1 contains the component (x) and the component (y) at a ratio of 90/10 in terms of mass ratio, the resin composition of Example 2 contains the component (x) and the component (y) at a ratio of 70/30 in terms of mass ratio, and the resin composition of Example 3 contains the component (x) and the component (y) at a ratio of 50/50 in terms of mass ratio. All the resin compositions each have a peak of tanδ around 10°C, the peak top intensity of which is high, and the value of tanδ is large around room temperature. The resin composition of Example 4 contains the component (x) and the component (y) at a ratio of 70/30 in terms of mass ratio, and has a peak of tanδ around 30°C, the peak top intensity of which is high. All the resin compositions each have a melt flow rate of 3 g/10 min or more, and the resin compositions of Examples 3 and 4 each have a significantly large melt flow rate.

The resin composition of Example 2 has the domains in the state with a relatively small aspect ratio dispersed in the matrix, as shown in Fig. 1, and the average aspect ratio is 1.3.

Consequently, it is understood that the resin compositions of Examples 1 to 4 satisfy the requirements [1] to [4], can exhibit a high vibration damping capability around room temperature, and have a good moldability.

On the other hand, the resin composition of Comparative Example 1 containing no component (y) has a lower peak top intensity of tanδ and a smaller value of tanδ at 20°C than the resin composition of Example 2 containing the component (x) at the same proportion, from which it is understood that the vibration damping capability around room temperature thereof is inferior to Example 2. The resin composition has a smaller melt flow rate than the resin composition of Example 2, from which it is understood that the moldability thereof is inferior to the resin composition of Example 2.

The resin composition of Comparative Example 2 has an extremely smaller melt flow rate than the resin composition of Example 3 containing the component (x) at the same proportion, from which it is understood that the moldability thereof is inferior to the resin composition of Example 3. The resin composition has a smaller value of tanδ at 20°C than the resin composition of Example 3, from which it is understood that the vibration damping capability around room temperature thereof is inferior to Example 3.

The resin composition of Comparative Example 1 has a larger size of the domains than the resin composition of Example 2, as shown in Fig. 2, and the average aspect ratio of the domains is 5. It is understood from Fig. 2 that in the matrix of the component (x), the other resin component exists in the form of stripes, from which it is understood that a structural anisotropy exists.

### [Example 5]

30 parts by mass of the hydrogenated block copolymer TPE-1 and 70 parts by mass of the hydrogenated block copolymer TPE-6 were used and melt-kneaded with a twin-screw extruder ("ZSK26Mc", available from Coperion GmbH) under conditions of a cylinder temperature of 230°C and a screw rotation number of 300 rpm, so as to produce a resin composition.

### [Examples 6 to 8 and Comparative Examples 3 and 4]

Resin compositions were produced in the same manner as in Example 5 except that the composition of the resins was changed as shown in Table 4.

The resin compositions each were measured for the properties according to the measurement methods described above. The measurement results are shown in Table 4 with the compositions thereof.

**Table 4**

| | | | Example 5 | Example 6 | Example 7 | Example 8 | Comparative Example 3 | Comparative Example 4 |
|---|---|---|---|---|---|---|---|---|
| Composition of resin (part by mass) | Component (x) | TPE-1 | 30 | 15 | 30 | - | 30 | 100 |
| | | TPE-3 | - | - | - | 20 | - | - |
| | | TPE-4 | - | 15 | - | - | - | - |
| | Component (y) | TPE-5 | - | - | 70 | 80 | - | - |
| | | TPE-6 | 70 | 70 | - | - | - | - |
| | Component other than (x) and (y) | TPE-7 | - | - | - | - | 70 | - |
| Biobased content (% by mass) | | | 35 | 35 | 57 | 35 | 0 | 0 |
| tanδ (shear, 1 Hz) | | 0°C | 0.36 | 0.68 | 0.41 | 0.35 | 0.06 | 0.17 |
| | | 20°C | 0.42 | 0.30 | 0.51 | 0.18 | 0.29 | 1.43 |
| | | 40°C | 0.18 | 0.14 | 0.22 | 0.14 | 0.09 | 0.38 |
| Peak top intensity of tanδ | | | 0.58 | 0.68 | 0.93 | 0.81 | 0.29 | 2.20 |
| Peak top temperature of tanδ (°C) | | | 8 | 0 | 9 | -17 | 16 | 15 |
| G' at -20°C (MPa) | | | 10 | 15 | 9 | 0.9 | 4 | 220 |
| MFR (230°C, 2.16 kg) (g/10 min) | | | 45 | 55 | 1 | 1 | 3 | 1 |

As shown in Table 4, the resin compositions of Examples 5 to 7 each contain the component (x) and the component (y) at a ratio of 30/70 in terms of mass ratio, the resin composition of Example 8 contains the component (x) and the component (y) at a ratio of 20/80 in terms of mass ratio, and all the resin compositions each have a high peak top intensity of tanδ and a low value of G' at -20°C, and are excellent in flexibility at low temperature. Therefore, it is understood that the resin compositions of Examples 5 to 8 satisfy the requirements [1] to [4], are capable of exhibit a high vibration damping capability around room temperature, and are excellent in flexibility at low temperature. The resin compositions of Examples 5 and 6 each have an extremely large melt flow rate, from which it is understood that in addition to the vibration damping capability around room temperature and the flexibility at low temperature, the moldability can be enhanced by selecting the kind of the component (y).

On the other hand, the resin composition of Comparative Example 3 containing no component (y) has a peak top temperature of tanδ that is shifted to the higher temperature region than the resin compositions of Examples, and a peak top intensity of tanδ that is lower than the resin compositions of Examples. The value of tanδ at 20°C thereof is smaller than Examples 5 and 7 containing TPE-1 as the component (x) in the same proportion, from which it is understood that the vibration damping capability around room temperature thereof is inferior to the resin compositions of Examples 5 and 7. The value of melt flow rate thereof is smaller than the resin composition of Example 5 containing the component (x) in the same proportion, from which it is understood that the moldability thereof is inferior to Example 5.

The resin composition of Comparative Example 4 containing only the component (x) but not containing the component (y) has an extremely large value of G' at -20°C, from which it is understood that the flexibility at low temperature thereof is poor.

### [Example 9 and Comparative Examples 5 and 6]

The component (x), the component (y), an ethylene-vinyl acetate resin, a foaming aid, a filler, and a crosslinking aid were used in the proportions of the composition shown in Table 5 below, and melt-kneaded at 120°C with a kneader to provide a master batch.

A crosslinking agent and a foaming agent were added to the resulting master batch in the proportions of the composition shown in Table 5, and the mixture was roll-kneaded at a roll temperature of 110°C to provide a foamable composition. The resulting foamable composition was pressed in a mold having a thickness of 10 mm at 165°C and 10 MPa for 20 minutes to provide a crosslinked foam body.

The resulting crosslinked foam body was measured for the properties and evaluated in the methods described above.

The components used for producing the crosslinked foam bodies were as follows.

### (Component (x))

TPE-1

### (Component (y))

TPE-5
TPE-6

### (Ethylene-vinyl acetate resin)

EVA-1: "Evaflex EV40LX" available from Dow-Mitsui Polychemicals Co., Ltd.
EVA-2: "Evaflex EV460" available from Dow-Mitsui Polychemicals Co., Ltd.

### (Filler)

Calcium carbonate

### (Crosslinking agent)

DCP-40: "Percumyl D-40", available from NOF Corporation

### (Crosslinking aid)

TAIC-60: "Taic M-60", available from Mitsubishi Chemical Corporation

### (Foaming agent)

ADCA: Azo compound foaming agent "Cellmic CE", available from Sankyo Kasei Co., Ltd.

### (Foaming aid)

Stearic acid
Zinc oxide

The crosslinked foam bodies each were measured for the properties by the methods described above. The measurement results are shown in Table 5 with the compositions thereof.

**Table 5**

| | | | Example 9 | Comparative Example 5 | Comparative Example 6 | Comparative Example 7 |
|---|---|---|---|---|---|---|
| Composition of resin (part by mass) | Component (x) | TPE-1 | 30 | 70 | - | - |
| | Component (y) | TPE-5 | 40 | - | 30 | 40 |
| | | TPE-6 | - | - | 50 | 30 |
| | Component other than (x) and (y) | EVA-1 | 10 | 10 | 20 | 10 |
| | | EVA-2 | 20 | 20 | - | 20 |
| | | Calcium carbonate | 2 | 2 | 2 | 2 |
| | | DCP-40 | 2.25 | 2.25 | 2.5 | 2.25 |
| | | TAIC-60 | 1 | 1 | 1 | 1 |
| | | ADCA | 2 | 2 | 2 | 2 |
| | | Stearic acid | 1 | 1 | 1 | 1 |
| | | Zinc oxide | 2 | 2 | 2 | 2 |
| Biobased content (% by mass) | | | 33 | 0 | 50 | 48 |
| Foaming ratio (times) | | | 6.2 | 4.9 | 4.9 | 4.8 |
| Specific gravity (g/cm3) | | | 0.18 | 0.22 | 0.22 | 0.23 |
| tanδ (compression, 10 Hz) | | 0°C | 0.42 | 0.12 | 0.24 | 0.25 |
| | | 20°C | 0.50 | 1.08 | 0.17 | 0.15 |
| | | 40°C | 0.24 | 0.49 | 0.14 | 0.12 |
| Peak top intensity of tan δ | | | 0.55 | 1.08 | 0.24 | 0.25 |
| Peak top temperature of tanδ (°C) | | | 13 | 20 | 0 | 0 |
| E' at -20°C (MPa) | | | 38 | 154 | 2 | 5 |
| Rebound elastic modulus (%) | | 0°C | 11 | 16 | 24 | 22 |
| | | 20°C | 15 | 3 | 43 | 40 |
| Hardness | | 0°C | 39 | 65 | 27 | 28 |
| | | 20°C | 28 | 34 | 24 | 25 |

As shown in Table 5, the crosslinked foam body of Example 9 contains the component (x) and the component (y) at a ratio of 30/40 in terms of mass ratio, and exhibits a high peak top intensity of tanδ, and also a low value of E' at -20°C, small rebound elastic moduli at 0°C and 20°C, and a small hardness at 0°C. Consequently, it is understood that the crosslinked foam body of Example 9 satisfies the requirements [1] to [4], can exhibit a high vibration damping capability around room temperature, and is excellent in flexibility at low temperature.

On the other hand, the crosslinked foam body of Comparative Example 5 containing no component (y) but containing the component (x) in the same amount as the total of the component (x) and the component (y) in Example 9 has a smaller value of tanδ at 0°C than the crosslinked foam body of Example 9, from which it is understood that the vibration damping capability at low temperature thereof is inferior thereto. The value of E' at -20°C is extremely large, and the hardness at 0°C is extremely high, from which it is understood that the flexibility at low temperature thereof is inferior to crosslinked foam body of Example 9.

The crosslinked foam bodies of Comparative Examples 6 and 7 containing no component (x) each have smaller values of tanδ at 0 to 40°C than the crosslinked foam body of Example 9, from which it is understood that the vibration damping capability around low temperature to room temperature thereof is inferior thereto. The values of the rebound elastic modulus at 0°C and 20°C are large, from which it is understood that the flexibility at low temperature is inferior to the crosslinked foam body of Example 9.

### Industrial Applicability

The resin composition of the present invention can be applied to shoe sole members, such as an inner sole, a sock liner, a mid sole, and an outer sole, a chassis of an automobile, and various components mounted on an automobile and housings thereof. The resin composition can also be applied to electric equipment in the field of household appliances, for example, various recorders, such as a television and blue-ray recorder and a HDD recorder, a projector, a gaming machine, a digital camera, a home video, an antenna, a speaker, an electronic dictionary, an electronic voice recorder, a facsimile machine, a duplicator, a telephone, an intercom, a rice cooker, a microwave oven, a multifunctional convection microwave oven, a refrigerator, a dishwasher, a dish dryer, an induction cooking heater, a hot plate, a vacuum cleaner, a laundry machine, a battery charger, a sewing machine, a clothes iron, a clothes dryer, an electric bicycle, an air cleaner, a water cleaner, an electric toothbrush, a lightening equipment, an air conditioner, an outdoor unit of an air conditioner, a dehumidifier, and a humidifier.

## Claims

1. A resin composition comprising:
as a component (x), a hydrogenated product (X) of a block copolymer having a polymer block (A-1) containing a structural unit derived from an aromatic vinyl compound and a polymer block (B-1) containing a structural unit derived from a conjugated diene compound; and
as a component (y), a block copolymer (Y0) having a polymer block (A-2) containing a structural unit derived from an aromatic vinyl compound and a polymer block (B-2) containing a structural unit derived from a conjugated diene compound, or a hydrogenated product thereof (Y),
satisfying the following requirements [1] to [4]:
[1] the component (x) has a glass transition temperature of -40°C or more,
[2] the component (y) has a glass transition temperature of -50°C or less,
[3] the resin composition has a ratio Mx/My of a mass Mx of the component (x) with respect to a mass My of the component (y) of 1/99 to 99/1, and
[4] the polymer block (B-2) contains a structural unit derived from β-farnesene.

2. The resin composition according to claim 1, wherein the component (x) has a content of the polymer block (A-1) of 23% by mass or less.

3. The resin composition according to claim 1 or 2, wherein the component (x) has a hydrogenation rate of 85% by mol or more.

4. The resin composition according to any one of claims 1 to 3, wherein the component (x) has a weight average molecular weight of 100,000 to 250,000.

5. The resin composition according to any one of claims 1 to 4, wherein the component (x) has a melt flow rate at 230°C and a load of 2.16 kg of 20 g/10 min or less, measured according to JIS K7210:2014.

6. The resin composition according to any one of claims 1 to 5, wherein the polymer block (B-1) contains a structural unit derived from isoprene.

7. The resin composition according to any one of claims 1 to 6, wherein the polymer block (B-1) has a vinyl bond amount of 50% by mol or more.

8. The resin composition according to any one of claims 1 to 7, wherein the component (y) has a content of the polymer block (A-2) of 35% by mass or less.

9. The resin composition according to any one of claims 1 to 8, wherein the component (y) is the hydrogenated product (Y) of the block copolymer, and the hydrogenated product (Y) of the block copolymer has a hydrogenation rate of 85% by mol or more.

10. The resin composition according to any one of claims 1 to 9, wherein the component (y) has a weight average molecular weight of 40,000 to 400,000.

11. The resin composition according to any one of claims 1 to 10, wherein the component (y) has a melt flow rate at 230°C and a load of 2.16 kg of 10 g/10 min or more, measured according to JIS K7210:2014.

12. The resin composition according to any one of claims 1 to 11, wherein the ratio Mx/My is 45/55 to 80/20.

13. The resin composition according to any one of claims 1 to 11, wherein the ratio Mx/My is 20/80 to 37/63.

14. The resin composition according to any one of claims 1 to 13, wherein the resin composition has a biobased content of 1 to 80% by mass, measured according to ASTM D6866-20.

15. The resin composition according to any one of claims 1 to 14, wherein the resin composition has a melt flow rate at 230°C and a load of 2.16 kg of 100 g/10 min or less, measured according to JIS K7210:2014.

16. The resin composition according to any one of claims 1 to 15, wherein the resin composition has a peak top intensity of tanδ of 0.4 or more, measured according to JIS K7244-10:2005, under conditions of a strain amount of 0.1%, a frequency of 1 Hz, a measurement temperature of -30 to +50°C, a heating rate of 3°C/min, and a shearing mode.

17. The resin composition according to any one of claims 1 to 16, wherein the component (x) has a content of the structural unit derived from β-farnesene that is smaller than a content of the structural unit derived from β-farnesene of the component (y).

18. The resin composition according to any one of claims 1 to 17, wherein in the resin composition, one of the component (x) and the component (y) is as a matrix, and the other of the component (x) and the component (y) forms domains dispersed in the matrix, and the domains have an average aspect ratio of 1.0 to 3.0.

19. A foamable composition comprising:
the resin composition (i) according to any one of claims 1 to 18;
at least one kind of an olefin-based polymer (ii) selected from the group consisting of ethylene-propylene-diene copolymer rubber, an ethylene-vinyl acetate copolymer, and a polyethylene-based resin;
a crosslinking agent (iii); and
a foaming agent (iv).

20. A crosslinked foam body comprising the foamable composition according to claim 19.
